# EUROPEAN PATENT APPLICATION

(11) **EP 4 628 263 A1**
(43) Date of publication of application: **08.10.2025**
(21) Application number: 23897938.9
(22) Date of filing: 11.05.2023
(51) Int. Cl.: B25J 9/16, B25J 5/00, B62D 57/028

(54) **ROBOT AND METHOD FOR CONTROLLING ROBOT**

(30) Priority: 28.11.2022 KR 20220161315
(71) Applicant: LG Electronics Inc., Yeongdeungpo-gu Seoul 07336 (KR)
(72) Inventor: CHOI, Dongkyu, Seoul 08592 (KR); KIM, Seongmin, Seoul 08592 (KR); KIM, Jinju, Seoul 08592 (KR)
(74) Representative: Vossius & Partner Patentanwälte Rechtsanwälte mbB
(86) International application number: PCT/KR2023/006422
(87) International publication number: WO 2024/117398

(57) **Abstract**

The present invention relates to a robot capable of providing various services according to a command input of a user, and a method of controlling a robot, and according to one embodiment of the present invention, there may be provided a method of controlling a robot including a wheel motor that rotates wheels respectively disposed on left and right sides of a robot body, and an arm motor that rotates an integrated arm simultaneously coupled to both left and right side surfaces of the robot body, including driving the arm motor so that one end portion of the arm approaches a ground, stopping driving of the wheel motor so that the robot tilts backward, and changing the robot to a standby posture while supported at three points on the ground.

## Description

### [Technical Field]

The present invention relates to a robot and a method of controlling the robot. More specifically, the present invention relates to a robot capable of providing various services according to a command input of a user, and a method of controlling a robot.

### [Background Art]

Recently, with the advancement of a robot technology, the use of robots is increasing not only in industrial fields but also at home.

Home robots are robots that perform home tasks on behalf of people, such as helping with housework such as cleaning or controlling home appliances, or robots that act as a user's assistant or provide training to the user using artificial intelligence (AI), robots that replace companion animals, etc.

There are not only robots that perform functions while fixed at a specific position but also mobile robots that can move. In particular, in the case of robots used at home, the mobile robots that replace the user or move around the home while following the user are mainly used.

Among the mobile robots, two-wheeled robots with two wheels have advantages of being easy to store because they occupy a small area of ground and being easily used in homes with a relatively limited space due to a small rotation radius when the robot changes a direction.

Despite these advantages, the two-wheeled robots may have the following problems.

First, when the robot loses its balance and tilts forward or backward, causing it to fall to the ground, a strong torque needs to be applied to wheels momentarily in order to restore the center of gravity of the robot using only the rotating wheels. Accordingly, this can lead to not only a large power consumption problem but also damage to a wheel motor.

Second, even when the robot is not processing any command, in order for the robot to maintain its basic attitude using only two wheels, a rotational direction of the wheels needs to continuously vary depending on a tilting direction of the robot. Accordingly, since the wheel motor needs to be driven continuously, there is a problem that power consumption continues while the robot is waiting for a command, thereby quickly discharging a battery.

Meanwhile, as the related art related to a robot that travels using two wheels, US Patent Publication No. 2020-0362972 (hereinafter referred to as "Patent Document 1") is presented.

Patent Document 1 discloses a mobile robot that moves using a pair of legs having wheels.

The mobile robot may be moved by rotating the wheels provided on the pair of legs while lifting an object using an arm.

However, since the arm of the mobile robot has only the function of lifting an object, there is a limitation that the function of the robot cannot be expanded through the arm.

However, to maintain a balance during traveling or stopping, a body to which a leg unit is coupled is rotated in the form of a pendulum, and a counter-balance is rotated in response to the rotation of the body, thereby maintaining the balance of the mobile robot.

Accordingly, the mobile robot needs to continuously operate a motor to rotate the wheels and the counter-balance in order to maintain a stable attitude. That is, the mobile robot of Patent Document 1 does not suggest a solution to the limitation of the two-wheeled robot that needs to continuously consume power even when waiting for a command.

In addition, a method of raising a robot again when it has fallen is not disclosed at all.

As the related art on a robot configured to perform a motion that rises from the ground, Japanese Utility Model Registration No. 3136601 (hereinafter, "Patent Document 2") is presented.

Patent Document 2 discloses a walking toy in the shape of a robot that can raise its body.

The walking toy is configured to raise its body by supporting two legs on the ground and rotating two arms while lying on the ground.

However, the walking toy has a limitation that it cannot maintain its posture while supporting its body because the two arms are separated and each touches the ground.

In addition, since the arms of the walking toy do not have a structure that can be combined with other objects, there is a limitation that functions other than that of the toy cannot be added.

Moreover, since the walking toy of Patent Document 2 does not have legs with a wheel structure, unlike the two-wheeled robot, there is no problem of power consumption while standing with the legs on the ground, and it is obvious that no solution to the limitation of the two-wheeled robot that needs to continuously consume power even when waiting for a command is suggested.

### [Disclosure]

### [Technical Problem]

The present invention is intended to improve the above problems of a two-wheeled robot and is directed to providing a robot that can stand up by pressing against the ground and return to a basic posture when a body of the robot tilts forward or backward and falls on the ground, and a method of controlling of a robot.

In addition, the present invention is directed to providing a robot and a method of controlling a robot in which an excessive load can be prevented from being applied to a wheel motor when a fallen robot returns to a basic posture and at the same time, power consumption can be reduced.

In addition, the present invention is directed to providing a robot that can be changed to a standby posture in a situation in which it is not necessary to perform a command and changed to a basic posture for driving in a situation in which it is necessary to re-perform a command, and a method of controlling a robot.

### [Technical Solution]

According to one embodiment of the present invention, there may be provided a method of controlling a robot including a wheel motor that rotates wheels respectively disposed on left and right sides of a robot body, and an arm motor that rotates an integrated arm simultaneously coupled to both left and right side surfaces of the robot body, including driving the arm motor so that one end portion of the arm approaches a ground, stopping driving of the wheel motor so that the robot tilts backward, and changing the robot to a standby posture while supported at three points on the ground.

In one embodiment of the present invention, the robot may further include a suspension motor that adjusts a coupling angle of a joint structure between an upper link and a lower link of a leg unit connected between the wheel and the robot body.

In one embodiment of the present invention, the method may further include, before the driving of the arm motor, driving the suspension motor so that a distance between the wheel and the robot body decreases.

In one embodiment of the present invention, in the driving of the suspension motor, the coupling angle between the upper link and the lower link may decrease.

In one embodiment of the present invention, the robot may further include a leg unit connected between the wheel and the robot body and formed in a joint structure in which the upper link and the lower link are link-coupled.

In one embodiment of the present invention, the arm may include a pair of rotation coupling units rotatably coupled to the robot body and disposed on left and right sides thereof, respectively, and a connector connecting the pair of rotation coupling units.

In one embodiment of the present invention, in the driving of the arm motor, the connector may be disposed further forward and lower than a coupling point of the upper link and the lower link.

In one embodiment of the present invention, the driving of the arm motor may include stopping the driving of the arm motor when the arm is rotated to a position at which a rotation range of the arm is restricted by a stopper formed on the upper link.

In one embodiment of the present invention, in the driving of the arm motor, when a rotating protrusion formed on the arm and rotating along with the arm comes into contact with the stopper, movement of the joint structure may be restricted.

In one embodiment of the present invention, the method may further include, after the driving of the arm motor, stopping driving of the suspension motor in a state in which the movement of the joint structure is restricted.

According to another embodiment of the present invention, there may be provided a method of controlling a robot including a wheel motor that rotates wheels respectively disposed on left and right sides of a robot body, and an arm motor that rotates an integrated arm simultaneously coupled to both left and right side surfaces of the robot body, including driving the arm motor to bring the arm into contact with a ground when a component other than the wheels comes into contact with the ground as the robot tilts forward or backward, and simultaneously driving the wheel motor and the arm motor in the same direction to move the robot body upward.

In another embodiment of the present invention, the robot may further include a suspension motor that adjusts a coupling angle of a joint structure between an upper link and a lower link of a leg unit connected between the wheel and the robot body.

In another embodiment of the present invention, the method may further include, before the bringing the arm into contact with the ground, driving the suspension motor to decrease a distance between the wheel and the robot body.

In another embodiment of the present invention, the method may further include, after the moving of the robot body upward, driving the suspension motor to increase the distance between the wheel and the robot body.

In another embodiment of the present invention, the method may further include, after the moving of the robot body upward, driving the arm motor to move the arm to a position corresponding to a predetermined basic posture. In another embodiment of the present invention, the robot may further include a leg unit connected between the wheel and the robot body and formed in a joint structure in which the upper link and the lower link are link-coupled.

In another embodiment of the present invention, in the decreasing of the distance between the wheel and the robot body, the coupling angle between the upper link and the lower link may decrease.

In another embodiment of the present invention, in the bringing of the arm into contact with the ground, a center of gravity of the robot body may be disposed between a contact point at which the wheel comes into contact with the ground and a contact point at which the arm comes into contact with the ground.

In another embodiment of the present invention, the moving of the robot body upward may include simultaneously rotating the arm and the wheel forward in a state in which the arm is in contact with a ground in front of the wheel when the robot tilts forward and a component other than the wheel is in contact with the ground.

In another embodiment of the present invention, the moving of the robot body upward may include simultaneously rotating the arm and the wheel backward in a state in which the arm is in contact with a ground behind the wheel when the robot tilts backward and the component other than the wheel is in contact with the ground.

According to still another embodiment of the present invention, there may be provided a robot including a robot body in which a battery is accommodated, two wheels disposed below the robot body, two leg units connected between the robot body and the wheel, and an integrated arm including a pair of rotation coupling units respectively disposed on left and right sides rotatably coupled to the robot body, and a connector connecting the pair of rotation coupling units.

In still another embodiment of the present invention, when the wheel travels on the ground, the connector may maintain a basic posture in which the connector is disposed at an upper rear side of the robot body, and when a posture change occurs between the basic posture and another specific posture, an operation in which a position of the connector is changed by rotation of the arm may be involved.

In still another embodiment of the present invention, each of the leg units may include an upper link link-coupled to the robot body, and a lower link link-coupled to the upper link and coupled to the wheel.

In still another embodiment of the present invention, before the arm is rotated, an operation in which a coupling angle between the upper link and the lower link decreases may be performed.

In still another embodiment of the present invention, when the specific posture is a fallen posture in which the robot body tilts forward or backward and a component other than the wheel is in contact with the ground,

the arm may rotate so that the connector moves in a direction approaching the ground in a state of the fallen posture, and in a state in which the connector is in contact with the ground, the robot body may be moved upward by an operation in which the arm and the wheel rotate in the same direction so that the basic posture is restored.

In still another embodiment of the present invention, when the robot falls forward, both the arm and the wheel may rotate forward in a state in which the connector is in contact with a ground in front of the wheel.

In still another embodiment of the present invention, when the robot falls backward, both the arm and the wheel may rotate backward in a state in which the connector is in contact with a ground behind the wheel.

In still another embodiment of the present invention, when a predetermined specific condition is satisfied, the arm may rotate toward the rear of the robot body in the state of the basic posture, and may be changed to a standby posture having three contact portions spaced apart from each other with respect to the ground by the two wheels and the connector.

In still another embodiment of the present invention, before the change to the standby posture, the driving of the wheel motor that rotates the wheel may be stopped.

### [Advantageous Effects]

According to the present invention, when fallen, the robot can rotate its arm to be in contact with the ground and raise itself by rotating its wheels. In this case, since the rotational direction of the arm is controlled differently depending on the direction in which the robot has fallen, the robot can be returned to its basic posture regardless of the direction in which it has fallen.

In addition, according to the present invention, when the robot returns from the fallen posture to the basic posture, the step-by-step cooperation among the arm motor, the suspension motor, and the wheel motor is performed. Specifically, since the suspension motor is driven first before the arm motor is driven to fold the leg part, the rotational torque of the wheel motor is fully used to raise the robot, and the wheel motor and the arm motor rotate together in the same direction to raise the robot. That is, an excessive load can be prevented from being applied to the wheel motor, and at the same time, power consumption can be reduced.

In addition, according to the present invention, in a situation in which it is not necessary to perform a command, the arm can be rotated to stop the operation of the wheel motor while surrounding the leg part. Accordingly, the robot according to the embodiment of the present invention can be changed to the standby posture in which it is supported at three points on the ground. In such a standby posture, there is no need to perform balance control by rotational driving of the motor included in the robot, particularly, rotational driving of the wheel motor, and thus the battery of the robot can be prevented from being discharged prematurely.

Effects of the present invention are not limited to the above-described effects, and other effects that are not described will be able to be clearly understood by those skilled in the art from the above detailed description.

### [Description of Drawings]

FIG. 1 is a perspective view for describing a robot according to one embodiment of the present invention.
FIG. 2 is a front view of the robot according to one embodiment of the present invention.
FIG. 3 is a perspective view of the robot according to one embodiment of the present invention viewed at a different angle.
FIG. 4 is a partial cutout view for describing power transmission for rotating an arm in the robot according to one embodiment of the present invention.
FIG. 5 is a plan view of the robot according to one embodiment of the present invention.
FIG. 6 is a view for describing an arm of a robot according to another embodiment of the present invention.
FIG. 7 is a view for describing a rotated state of an attachment/detachment unit of the arm in FIG. 6.
FIG. 8 is a bottom view of the robot according to one embodiment of the present invention.
FIG. 9 is a block diagram for describing a control configuration of the robot according to one embodiment of the present invention.
FIGS. 10A and 10B are flowcharts showing a first embodiment of control methods related to a posture change of a robot.
FIGS. 11A to 11D sequentially show operation forms of the robot when changing from a basic posture to a standby posture.
FIG. 12 is a flowchart showing a second embodiment of a control method related to a posture change in a robot.
FIGS. 13A to 13F sequentially show operation forms of the robot for returning to the basic posture in case of falling forward.
FIGS. 14A to 14E sequentially show operation forms of the robot for returning to the basic posture in case of falling backward.
FIG. 15 is a view for describing a coupling relationship between a robot mask and a robot body in the robot according to one embodiment of the present invention.

### [Mode for Invention]

Hereinafter, exemplary embodiments of the present invention will be described in detail with reference to the accompanying drawings.

Since the present invention may have various changes and various embodiments, specific embodiments are shown in the accompanying drawings and specifically described in the detail descriptions. This is not intended to limit the present invention to specific embodiments and should be construed to include all modifications, equivalents, and substitutes included in the spirit and technical scope of the present invention.

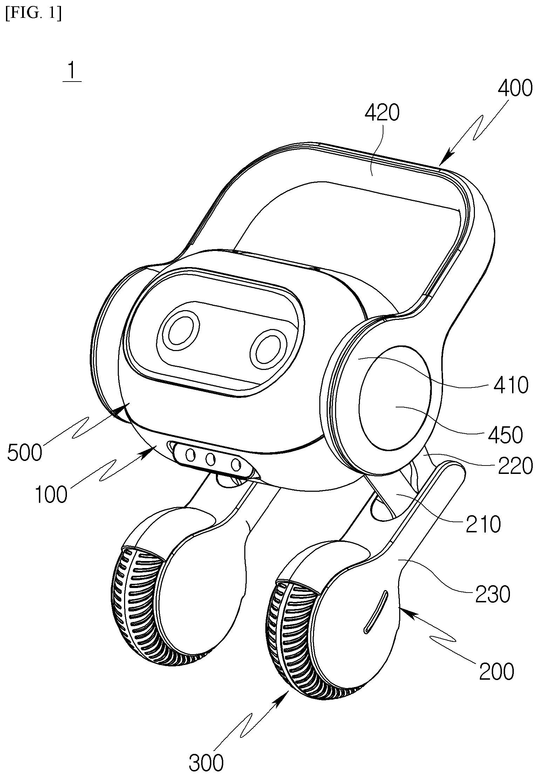

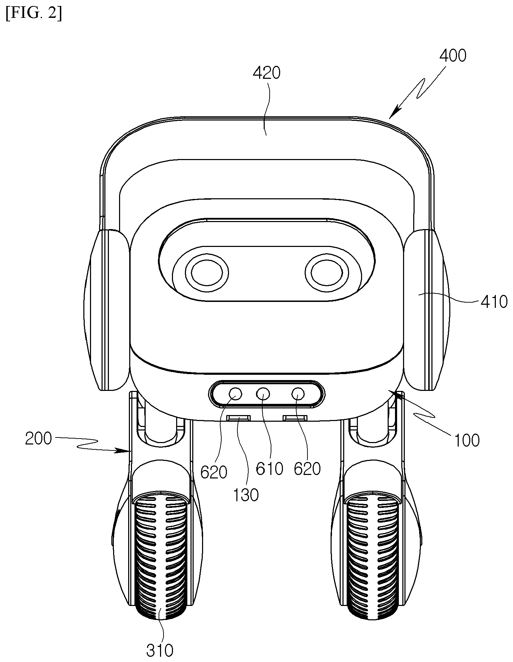

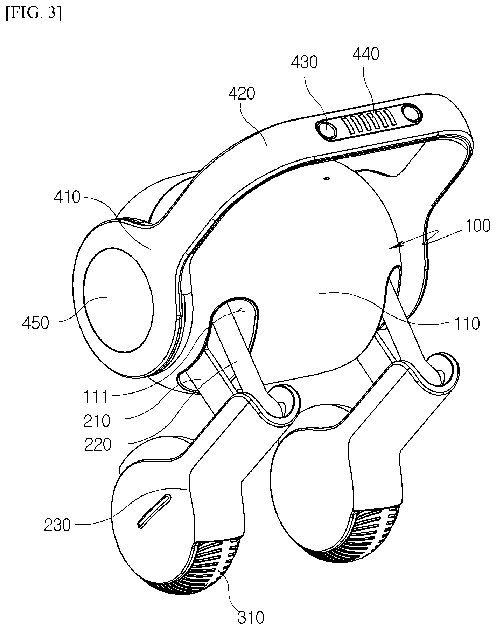

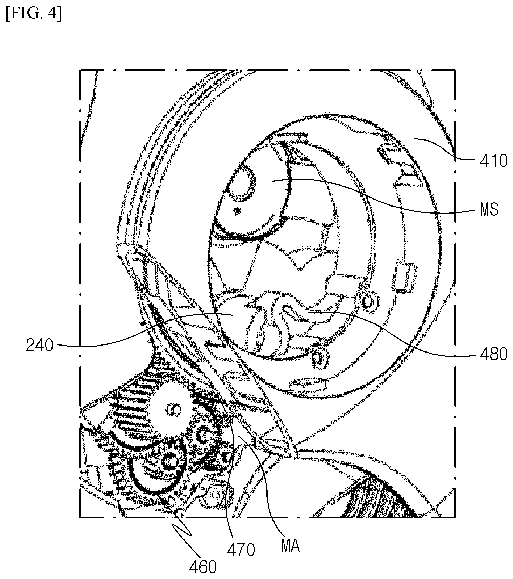

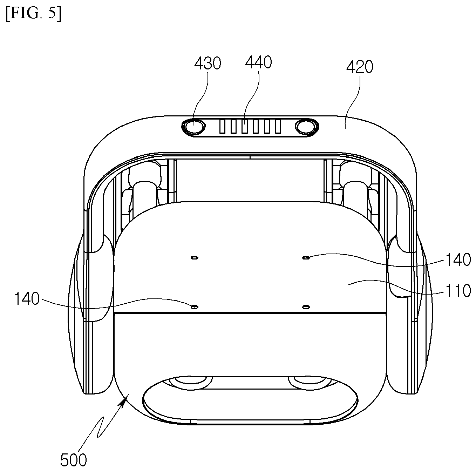

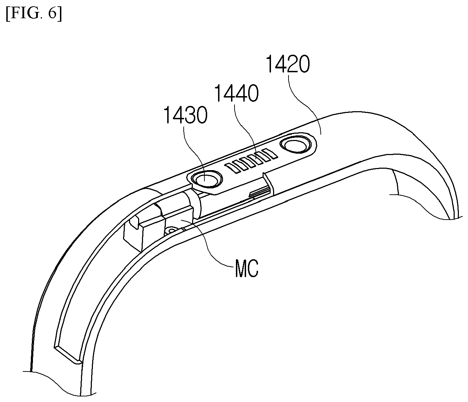

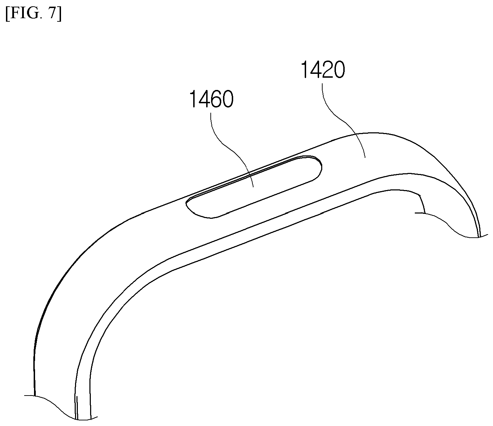

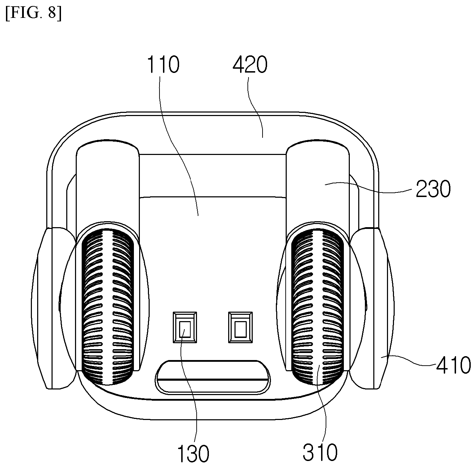

FIG. 1 is a perspective view for describing a robot according to one embodiment of the present invention, FIG. 2 is a front view of the robot according to one embodiment of the present invention, FIG. 3 is a perspective view of the robot according to one embodiment of the present invention viewed at a different angle, FIG. 4 is a partial cutout view for describing power transmission for rotating an arm in the robot according to one embodiment of the present invention, FIG. 5 is a plan view of the robot according to one embodiment of the present invention, FIG. 6 is a view for describing an arm of a robot according to another embodiment of the present invention, FIG. 7 is a view for describing a rotated state of an attachment/detachment unit of the arm in FIG. 6, and FIG. 8 is a bottom view of the robot according to one embodiment of the present invention.

Referring FIGS. 1 to 8, a robot 1 according to one embodiment of the present invention will be described as follows.

The robot 1 according to the embodiment of the present invention is disposed on a floor to move along a floor surface B. Accordingly, the following description will be made by setting a vertical direction based on a state in which the robot 1 is disposed on the floor.

In addition, the following description will be made by setting a side on which a mapping camera 610 to be described below is disposed as the front of the robot 1. In addition, the following description will be made by setting a direction opposite to the front as the rear of the robot 1.

A "lowest portion" of each component described in the embodiment of the present invention may be a portion of each component that is located to be lowest when the robot 1 according to the embodiment of the present invention is used while placed on the floor or may be a portion closet to the floor.

The robot 1 according to the embodiment of the present invention includes a robot body 100, a leg unit 200, a wheel unit 300, an arm 400, and a robot mask 500. In this case, the leg unit 200 is coupled to the robot body 100, and the wheel unit 300 is coupled to the leg unit 200. In addition, the arm 400 is pivotally coupled to both side surfaces of the robot body 100. In addition, the robot mask 500 is detachably coupled to the robot body 100.

### Robot body

The leg unit 100 of the robot 1 according to one embodiment of the present invention will be described with reference to FIGS. 1 to 8 as follows.

Components constituting the robot 1 may be coupled to the robot body 100. For example, the robot mask 500 may be detachably coupled to the robot body 100. In addition, the arm 400 is pivotally coupled to the robot body 100. The arm 400 is pivotally coupled to both end portions of the robot body 100. The robot body 100 may be coupled to a functional module 900 through the arm 400 to perform additional functions. In addition, the robot body 100 may implement a standby posture for power saving or a posture for rising after falling through the arm 400.

Some components constituting the robot 1 may be accommodated inside the robot body 100.

A body housing 110 may form an exterior of the robot body 100. An internal space of the body housing 110 may accommodate one or more motors including a suspension motor MS, one or more sensors, and a battery 800.

In addition, although not shown, at least one bumper may be provided inside the body housing 110.

The bumper may be provided to be relatively movable with respect to the body housing 110. For example, the bumper may be coupled to the body housing 110 so as to be reciprocally movable in a front-rear direction of the body housing 110.

The bumper may be coupled along a portion or the entirety of a front edge of the body housing 110. In addition, the bumper may be disposed on an inner rear side of the body housing 110.

With this configuration, when the robot 1 collides with another object or person, the bumper can protect the robot body 100 and components accommodated inside the robot body 100 by absorbing an impact applied to the robot body 100.

A pair of leg units 200 are coupled inside the body housing 110. The pair of leg units 200 may pass through the body housing 110 and may be exposed to the outside.

Specifically, a first link 210 and a second link 220 may be rotatably coupled inside the body housing 110. For example, a link frame (not shown) to which the first link 210 and the second link 220 are link-coupled may be provided inside the body housing 110.

In addition, the suspension motor MS may be accommodated inside the body housing 110. For example, the suspension motor MS may be disposed in the link frame (not shown). The suspension motor MS may be connected to the first link 210.

A pair of leg guide holes 111 may be formed in the body housing 110. For example, the pair of leg guide holes 111 may be formed in parallel in the front-rear direction of the body housing 110.

With this configuration, the leg unit 200 may move while rotating along the leg guide holes 111 and guide a rotational movement range of the leg unit 200.

The body housing 110 may be formed in a shape in which a horizontal width (or diameter) is larger than a vertical height. For example, the body housing 110 may be formed in a shape similar to an ellipsoid.

The robot body 100 may assist the robot 1 in forming a stable structure and provide a structure advantageous for maintaining balance when the robot 1 moves (travels).

The robot body 100 may be disposed vertically above the wheel 310 to be described below. A load of the robot body 100 may be transmitted to the wheel 310 through the leg unit 200, and the wheel 310 may support the leg unit 200 and the robot body 100. With this configuration, the wheel 310 can stably support the load of the robot body 100.

The robot body 100 may include a display 120. The display 120 may be coupled to the body housing 110. The display 120 may be formed in a flat shape. The display 120 may be disposed at a predetermined angle with respect to the ground. For example, the display 120 may be disposed in a position facing the upper front direction. With this configuration, when the robot 1 approaches a user, the display 120 may be made visible when the user views the robot 1.

Meanwhile, the display 120 may visually convey information about an operating state of the robot 1 to the user.

The display 120 may be formed as one element of a light-emitting diode (LED), a liquid crystal display (LCD), a plasma display panel, and an organic light-emitting diode (OLED).

The display 120 may display information such as operating time information of the robot 1, battery 800 power information, etc.

According to an embodiment, the display 120 may be an input unit 125. That is, the display 120 may receive control commands from the user. For example, the display 120 may be a touch screen that visually shows an operating state and receives the control commands from the user.

The display 120 may display a facial expression of the robot 1. Alternatively, the display 120 may display the pupils of the robot 1. A current state of the robot 1 may be represented by an emotion personified through the shape of the face or the shape of the pupils displayed on the display 120. For example, when the user goes out and returns home, the display 120 may display a smiling facial expression or smiling eye shape. Accordingly, the user may feel the interaction with the robot 1.

A charging terminal 130 may be disposed on the body housing 110. For example, the charging terminal 130 may be disposed to face the ground. For example, the charging terminal 130 may be disposed to face the ground. As another example, the charging terminal 130 may be disposed at a predetermined angle with respect to the ground. With this configuration, when the robot 1 is coupled to a robot charging stand (not shown), the charging terminal 130 may come into contact with a terminal provided on the robot charging stand (not shown).

The charging terminal 130 may be electrically connected to the robot charging stand (not shown). With this configuration, the robot 1 may receive power through the charging terminal 130. The power supplied to the charging terminal 130 may be supplied to the battery 800. In addition, the robot 1 may receive an electric signal through the charging terminal 130. The controller 700 may receive the electric signal transmitted through the charging terminal 130.

Meanwhile, the mapping camera 610 may be disposed on a front lower portion of the body housing 110. For example, the mapping camera 610 may be disposed on a center line passing through left and right centers of the body housing 110. With this configuration, the mapping camera 610 may detect an object or person disposed in front of the robot 1.

In addition, an IR sensor 620 may be disposed on the front lower portion of the body housing 110. For example, a pair of IR sensors 620 may be disposed at a predetermined distance in the left-right direction. With this configuration, the IR sensor 620 may detect a position of a light source that generates infrared rays.

The IR sensor 620 may be disposed close to the mapping camera 610. For example, the mapping camera 610 may be disposed between the pair of IR sensors 620.

### Leg unit

The leg unit 200 of the robot 1 according to one embodiment of the present invention will be described with reference to FIGS. 1 to 8 as follows.

The leg unit 200 may be coupled to the robot body 100 to support the robot body 100. For example, the leg unit 200 is provided as a pair of leg units, each of which is coupled to the inside of the body housing 110. The pair of leg units 200 may be disposed symmetrically (line symmetrically). In this case, at least a portion of the leg unit 200 is disposed closer to the ground than the robot body 100. The leg unit 200 is disposed to connect the robot body 100 to the wheel 310.

Accordingly, the robot body 100 may travel while standing on the ground using the pair of leg units 200. That is, gravity applied to the robot body 100 may be supported by the leg unit 200, and a height of the robot body 100 may be maintained.

The leg unit 200 includes the first link 210, the second link 220, and a third link 230. In this case, each of the first link 210 and the second link 220 is rotatably coupled to the robot body 100 and the third link 230. That is, each of the first link 210 and the second link 220 is link-coupled to the robot body 100 and the third link 230.

The first link 210 is link-coupled to left and right sides inside the robot body 100.

The first link 210 is connected to the suspension motor MS. For example, the first link 210 may be connected to a shaft of the suspension motor MS directly or through a gear. With this configuration, the first link 210 receives a driving force from the suspension motor MS.

The first link 210 is formed in a frame shape, one longitudinal one side of which is connected to the suspension motor MS, and the other longitudinal side of which is coupled to the third link 230. In this case, the one side of the first link 210 connected to the suspension motor MS may be positioned farther from the ground than the other side coupled to the third link 230.

The one side of the first link 210 is coupled to a leg support (not shown) provided inside the body housing 110. The first link 210 may be rotatably coupled to the leg support. For example, the one side of the first link 210 may be formed in a disk shape or a circular plate shape. Accordingly, the one side of the first link 210 may be connected to the suspension motor MS through the leg support.

The one side of the first link 210 is connected to the suspension motor MS. For example, the one side of the first link 210 may be fixedly coupled to the shaft of the suspension motor MS. With this configuration, when the suspension motor MS is driven, the one side of the first link 210 may be rotated in conjunction with the rotation of the shaft of the suspension motor MS.

The other side of the first link 210 is rotatably coupled to the third link 230. For example, a through hole may be formed in the other side of the first link 210. The shaft may be rotatably coupled by passing through the through hole. Two end portions of the shaft in a longitudinal direction may be coupled to the third link 230.

With this configuration, the shaft may become a shaft about which the first link 210 and/or the third link 230 rotate. Accordingly, the first link 210 may be connected to be rotatable relatively with respect to the third link 230.

Although not shown, the leg unit 200 may further include a gravity compensator. The gravity compensator compensates for the robot body 100 falling vertically downward due to gravity. That is, the gravity compensator provides a force to support the robot body 100.

For example, the gravity compensator may be a torsion spring. The gravity compensator may be wound to surround an outer surface of the first link 210. In addition, one end portion of the gravity compensator may be inserted into and fixedly coupled to the first link 210, and the other end of the gravity compensator may be inserted into and fixedly coupled to the third link 230.

The gravity compensator applies a force (a rotational force) in a direction in which an angle between the first link 210 and the third link 230 increases. For example, the gravity compensator is configured such that both ends are pre-contracted inward so as to apply a restoring force in the direction in which the angle between the first link 210 and the third link 230 increases. Accordingly, even when gravity is applied to the robot body 100 in a state in which the robot 1 is disposed on the ground, the angle between the first link 210 and the third link 230 may be maintained within a predetermined angle range.

With this configuration, it is possible to prevent the robot body 100 from moving down toward the ground even when the suspension motor MS is not driven. Accordingly, the gravity compensator can prevent energy loss due to the driving of the suspension motor MS and maintain the height of the robot body 100 to a predetermined distance or more from the ground.

The second link 220 is link-coupled to left and right sides inside the robot body 100. For example, the second link 220 may be link-coupled to the leg support (not shown) provided inside the body housing 110. That is, the second link 220 may be coupled to the leg support (not shown) to which the first link 210 is coupled together.

The second link 220 is formed in a frame shape, one longitudinal side of which is coupled to the leg support (not shown), and the other longitudinal side of which is coupled to the third link 230.

An electric wire may be accommodated in the second link 220. For example, a space in which the electric wire may be accommodated may be formed inside the second link 220. Accordingly, power from the battery 800 may be supplied to the wheel unit 300 through the electric wire. In addition, the electric wire can be prevented from being exposed to the outside.

The one side of the second link 220 is rotatably coupled to the leg support. For example, although not shown, the shaft coupled to the leg support may be coupled by passing through the one side of the second link 220. A hollow may be formed in the shaft. The electric wire may pass through the hollow. With this configuration, it is possible to prevent the electric wire through which power is supplied from the battery 800 to a wheel motor MW from being exposed to the outside.

The other side of the second link 220 is rotatably coupled to the third link 230. Specifically, the other end portion of the second link 220 is rotatably coupled to the third link 230 through the shaft. For example, the other side of the second link 220 may be formed in a disk shape, and the shaft may be coupled by passing through the other side of the second link 220. In addition, both end portions of the shaft in the longitudinal direction may be coupled to the third link 230. With this configuration, the shaft may become a shaft about which the second link 220 and/or the third link 230 rotate. Accordingly, the second link 220 may be connected to be rotatable relatively with respect to the third link 230.

The third link 230 is link-coupled to the first link 210 and the second link 220 and coupled to the wheel unit 300.

The third link 230 is formed in a frame shape, one longitudinal side of which is coupled to the first link 210 and the second link 220, and the other longitudinal side of which is coupled to the wheel unit 300.

The one longitudinal side of the third link 230 is link-coupled to the first link 210 and the second link 220. For example, a space may be formed in one side of the third link 230 to accommodate the first link 210 and the second link 220. That is, the one side of the third link 230 may be formed in the form of a pair of parallel frames, and the first link 210 and the second link 220 may be accommodated in a space between the pair of frames.

Here, two shafts may be disposed in parallel between the pair of frames. That is, both end portions each of the two shafts may be coupled to the pair of frames. In addition, each of the shafts may pass through the first link 210 and the second link 220. In this case, the first link 210 may be disposed lower and further forward than the second link 220. That is, the shaft passing through the first link 210 may be disposed closer to the wheel 310 than the shaft passing through the second link 220.

Accordingly, each of the first link 210 and the second link 220 may be coupled to be rotatable relatively with respect to the third link 230.

The other longitudinal side of the third link 230 is coupled to the wheel unit 300. The other longitudinal side of the third link 230 may be formed to cover at least a portion of the wheel 310. For example, the other longitudinal side of the third link 230 may be formed to cover the center of rotation of the wheel 310, and a space in which th wheel 310 may be rotatably accommodated may be formed in the third link 230.

In addition, a wheel motor MW may be accommodated inside the other longitudinal side of the third link 230.

With this configuration, the wheel 310 and the wheel motor MW may be accommodated on the other longitudinal side of the third link 230, and the wheel 310 may be rotatably coupled.

Meanwhile, a sensor capable of measuring a distance from the ground may be provided on the other longitudinal side of the third link 230. For example, the sensor may be a time of flight sensor (ToF sensor). With this configuration, a controller 700 may determine whether the wheel 310 is in contact with the ground.

Meanwhile, a stopper 240 may be provided on the leg unit 200. The stopper 240 may be disposed inside the body housing 110. The stopper 240 may be disposed adjacent to a rotation coupling unit 410 of the arm 400. For example, the stopper 240 may be disposed on the inner surface of the rotation coupling unit 410 formed in a cylindrical shape.

As an example, the stopper 240 may be disposed on the leg support (not shown). As another example, the stopper 240 may be disposed on the first link 210.

The stopper 240 may be formed in a shape protruding toward the rotation coupling unit 410. For example, the stopper 240 may have a predetermined thickness and may be formed to protrude in an arch shape that is disposed in a concentric circle. In this case, an outer surface of the stopper 240 may be disposed toward an upper front side of the robot 1, and an inner surface of the stopper 240 may be disposed toward a lower rear side of the stopper.

The stopper 240 may be supported in contact with a rotation protrusion 480 of the arm 400 to be described below. For example, the rotation protrusion 480 formed to protrude from the inner surface of the rotation coupling unit 410 may rotate along with the rotation of the arm 400 and come into contact with the rotation protrusion 480 when the arm 400 rotates to a predetermined position.

With this configuration, the stopper 240 may limit a rotation angle of the arm 400 when the arm 400 rotates.

From an overall perspective of the balance provided by the leg unit 200, the first link 210 and the second link 220 are rotatably coupled to the link frame (not shown) provided inside the robot body 100, and the first link 210 and the second link 220 are link-coupled with the third link 230. That is, the robot 1 has a structure that supports the robot body 100 through a four-bar linkage composed of the link frame (not shown), the first link 210, the second link 220, and the third link 230.

In addition, the leg unit 200 generates a restoring force in a direction in which the gravity compensator lifts the robot body 100. Accordingly, even in a state in which the suspension motor MS is not driven, the pair of leg units 200 may maintain the state of lifting the robot body 100 to a predetermined height from the ground.

Meanwhile, the robot 1 according to the embodiment of the present invention may maintain the balance by lifting one of the pair of wheels 310 to pass an obstacle or driving the suspension motor MS when the height of the robot body 100 is lowered for charging or the like.

When the suspension motor MS is driven, the first link 210 rotates about one end portion adjacent to the suspension motor MS, and the other end portion moves upward. In addition, the third link 230 connected to the other end portion of the first link 210 moves according to the rotation of the first link 210. In addition, the second link 220 is rotated by being pushed by the third link 230. As a result, one end portion of the third link 230 (a point coupled with the first link 210) may move backward, and the other end of the third link 230 may move upward.

With this configuration, even when the wheel 310 moves upward and downward, a movement range of the wheel 310 in the front-rear direction may be limited. Accordingly, the robot 1 can stably maintain the balance.

Accordingly, the robot 1 according to the present invention may pass obstacles of various heights using the four-bar linkage.

### Wheel unit

The wheel unit 300 of the robot 1 according to one embodiment of the present invention will be described with reference to FIGS. 1 to 8 as follows.

The wheel unit 300 may be rotatably coupled to the leg unit 200 and may roll on the ground to move the robot body 100 and the leg unit 200.

The wheel unit 300 includes the wheel 310 that rolls on the ground while being in contact with the ground.

The wheel 310 is provided to have a predetermined radius and a predetermined width in an axial direction. When viewing the robot 1 from the front, at least a portion of the robot body 100 and the leg unit 200 may be disposed vertically above the wheel 310.

Although not shown, the wheel 310 may include a wheel frame formed in a circular shape. The wheel frame may be formed in a cylindrical shape with one open side facing the shaft of the wheel motor MW. Accordingly, the weight of the wheel frame can be reduced.

However, when the wheel frame is formed in a cylindrical shape, the overall rigidity of the wheel frame can be reduced. Considering this, a rib (not shown) for reinforcing rigidity may be formed on each of inner and outer surfaces of the wheel frame.

A tire is coupled to the outer surface of the wheel frame. The tire may be formed in an annular shape having a diameter that it may be inserted into the outer surface of the wheel frame.

Grooves with a predetermined pattern may be formed by recessing an outer surface of the tire to improve tire grip.

In one embodiment, the tire may be formed of an elastic rubber material.

The wheel motor MW may provide a driving force to the wheel 310. The wheel motor MW may generate a rotational force by receiving power from the battery 800.

The wheel motor MW may be accommodated inside the other side of the third link 230. In addition, the shaft of the wheel motor MW may be coupled to the wheel 310. That is, the wheel motor MW may be an in-wheel motor.

With this configuration, when the wheel motor MW is driven, the wheel 310 may roll along the ground while rotating, and the robot 1 may move along the ground.

### Arm

The arm 400 of the robot 1 according to one embodiment of the present invention will be described with reference to FIGS. 1 to 8 as follows.

The arm 400 may be pivotally coupled to both side surfaces of the robot body 100. For example, the arm 400 may refer to a rotating body that is coupled to both end portions of the ellipsoidal robot body 100 in the axial direction (the longitudinal direction) and rotates about both end portions of the robot body 100 in the axial direction.

Specifically, the arm 400 includes the rotation coupling unit 410, a connector 420, a detachable unit 430, and a connection terminal 440.

The rotation coupling unit 410 may be rotatably coupled to both side surfaces of the robot body 100. The rotation coupling unit 410 may be provided as a pair of rotation coupling units and coupled to be rotatable relatively with respect to both left and right sides of the robot body 100. In this case, the pair of rotation coupling units 410 may rotate in conjunction with each other. That is, the pair of rotation coupling units 410 may rotate simultaneously, and rotational angles thereof may be the same. However, when viewed from the robot body 100, rotational directions of the pair of rotation coupling units 410 may be opposite. That is, when viewed from the robot body 100, when the rotation coupling unit 410 on one side rotates clockwise, the rotation coupling unit 410 on the other side may rotate counterclockwise.

The rotation coupling unit 410 may be formed in a shape that may cover both left and right end portions of the robot body 100. For example, the rotation coupling unit 410 may be formed in a cylindrical shape with a predetermined thickness. In this case, both left and right end portions of the robot body 100 may be disposed to face the rotation center of the rotation coupling unit 410.

That is, in the description of a state in which the rotation coupling unit 410 is coupled to the robot body 100, assuming that the robot body 100 is a human face, the rotation coupling unit 410 may have a shape similar to a pair of earplugs or earpieces of a headphone.

As shown in FIG. 4, the robot 1 according to one embodiment may be configured such that an arm motor MA is disposed inside the body housing 110. Alternatively, according to an embodiment, the arm motor MA may be disposed inside the rotation coupling unit.

The arm motor MA may be connected to the arm 400 to provide a driving force to the arm 400. More specifically, the shaft of the arm motor MA or a final output stage of a gear is connected to the rotation coupling unit 410. For example, as shown in FIG. 4, the shaft of the arm motor MA may be connected to a reducer 460, and the reducer 460 may be connected to a driven gear 470.

The reducer 460 may be composed of at least one gear, may transmit a rotational force applied from the arm motor MA to the driven gear 470, and reduce a rotational speed of the driven gear 470 through a gear ratio. Accordingly, precise rotation of the arm 400 may be controlled, and the arm 400 may provide a relatively large force.

The driven gear 470 may be coupled to the rotation coupling unit 410 and rotated integrally. The driven gear 470 may be engaged with an output end of the reducer 460 to receive the rotational power of the arm motor MA.

With this configuration, when the arm motor MA is operated, the rotation coupling unit 410 may be rotated.

The arm motor MA may be provided as two arm motors, and the two arm motors MA may be connected one-to-one to the pair of rotation coupling units 410. As another example, the arm motor MA may be provided as one arm motor and connected to one of the rotation coupling units 410.

With this configuration, when the arm motor MA is operated, the pair of rotation coupling units 410 are rotated together in conjunction with each other, and the connector 420 is rotated together according to the rotation of the rotation coupling unit 410. That is, according to the present invention, the rotation coupling unit 410 and the connector 420 of the arm 400 may be rotated integrally using the arm shaft of the rotation coupling unit 410 as a rotational axis.

Meanwhile, a speaker 450 may be disposed outside the rotation coupling unit 410. That is, the speaker 450 may be disposed on each of the pair of rotation coupling units 410 in a direction opposite to the direction in which the robot body 100 is disposed. Accordingly, the speakers 450 may be respectively disposed at positions covering both left and right sides of the body housing 110.

The speaker 450 may transmit information about the robot 1 as sound. The source of the sound transmitted by the speaker 450 may be sound data previously stored in the robot 1. For example, the pre-stored sound data may be voice data of the robot 1. For example, the pre-stored sound data may be a notification sound that guides the state of the robot 1. Meanwhile, the source of the sound transmitted by the speaker 450 may be sound data received through a communication unit 710.

Meanwhile, in the case of conventional robots, a pair of arms may be provided on both sides of a body similar to a human arm to move an object or perform a specific task.

However, when the pair of arms are provided as described above, each arm may move separately, and thus loads applied to both sides of the robot may vary. Accordingly, a problem that the robot tilts to one side and falls over may occur.

In addition, in a state in which the robot has fallen, the arm may attempt to stand up by pressing against the ground, but since the arms on both sides rotate separately to press against the ground, there is a limitation that the robot may lose its balance during the process of standing up and fall over again.

Meanwhile, in the case of a robot that transports an object or performs a specific task through one arm, there is a limitation that the load of the object being transported or an impact that may occur during the task may be concentrated on only one arm, causing damage to the arm.

To solve this problem, the robot 1 according to the embodiment of the present invention is configured such that one arm 400 is rotatably coupled to both sides of the robot body 100.

The connector 420 may connect the pair of rotation coupling units 410. The connector 420 may connect the pair of rotation coupling units 410, which cover both left and right sides of the robot body 100, to rotate together.

The connector 420 may connect the pair of rotation coupling units 410 and may be formed to be rotatable about the robot body 100. Specifically, the connector 420 may be formed in a frame shape in which both end portions in the longitudinal direction are formed to be bent and extended. In this case, both end portions of the connector 420 formed to be bent and extended may be disposed in parallel and connected to the pair of rotation coupling units 410. For example, the connector 420 may be formed in a "∩" shape. As another example, the connector 420 may be formed in an arch shape.

In the description of the arm 400 coupled to the robot body 100, assuming that the robot body 100 is a human face, the connector 420 may have a shape similar to a hair band of a headphone. That is, assuming that the robot body 100 is a human face, the arm 400 may appear in a shape similar to a headphone.

The connector 420 may be formed integrally with a pair of rotation coupling units 410. That is, the pair of rotation coupling units 410 and the connector 420 disposed on the left and right sides of the robot body 100, respectively, may form the integrated arm 400.

With this configuration, the pair of rotation coupling units 410 may be integrally connected to the connector 420 so that the entire arm 400 may rotate about the rotation coupling unit 410 together.

Meanwhile, a rotation radius of the arm 400 may be larger than the maximum length of the first link 210 and smaller than the maximum length of the leg unit 200. Specifically, the shortest distance from the rotation center of the rotation coupling unit 410 to an outer end portion of the connector 420 may be larger than the maximum length of the first link 210 and smaller than the maximum length of the leg unit 200.

With this configuration, when the arm 400 rotates, at least a portion of the arm 400 may be disposed closer to the ground than the first link 210.

Meanwhile, the arm 400 further includes the rotation protrusion 480 formed to protrude from the inner surface of the rotation coupling unit 410.

The rotation protrusion 480 may be formed to protrude from the inner surface of the rotation coupling unit 410 and formed in a form in which a circumferential width is smaller from the inner surface of the rotation coupling unit 410 toward the rotation center of the rotation coupling unit 410 (see FIG. 4).

The rotation protrusion 480 may rotate along with the rotation coupling unit 410 and the connector 420. That is, when the rotation coupling unit 410 and the connector 420 rotate, the rotation protrusion 480 rotates at the same rotational angle as the rotation coupling unit 410 and the connector 420.

The rotation protrusion 480 may be supported in contact with the stopper 240 according to the rotation of the arm 400. For example, when the connector 420 rotates passing the rear of the robot body 100 and comes closer to the ground than the first link 210, the rotation protrusion 480 may come into contact with the stopper 240.

With this configuration, when the arm 400 rotates to a predetermined position, the stopper 240 and the rotation protrusion 480 are supported in contact with each other, thereby limiting the rotation of the arm 400.

In addition, it is possible to maintain the posture of the arm 400 and the leg unit 200 while the stopper 240 and the rotation protrusion 480 support each other.

Meanwhile, FIGS. 6 and 7 show views for describing another embodiment of the arm of the robot according to the present invention.

An arm 1400 according to another embodiment of the present invention will be described with reference to FIGS. 6 and 7 as follows.

To avoid overlapping descriptions, with the exception of specific descriptions provided in the present embodiment, the arm 1400 has the same structure and effects as those of the arm 400 according to one embodiment of the present invention, and thus the structure and effects of the arm 400 may be applied by reference.

The arm 1400 of the present embodiment further includes a terminal rotation unit 1460 and a switching motor MC that provides a rotational force to the terminal rotation unit 1460.

The terminal rotation unit 1460 is rotatably coupled to a connector 1420. For example, the terminal rotation unit 1460 may be formed in a plate shape having a predetermined thickness, and the detachable unit 1430 and the connection terminal 1440 may be disposed on one surface thereof.

The terminal rotation unit 1460 may form an exterior of the arm 1400 along with the connector 1420. A rotational shaft coupled to the connector 1420 may be provided on both longitudinal end portions of the terminal rotation unit 1460.

The switching motor MC may be connected to the terminal rotation unit 1460 to provide a rotational force to the terminal rotation unit 1460. More specifically, the shaft of the switching motor MC or a final output stage of a gear is connected to the terminal rotation unit 1460.

With this configuration, when the switching motor MC is operated, the terminal rotation unit 1460 rotates.

When the terminal rotation unit 1460 rotates, a surface exposed to the outside may be changed. Specifically, one surface of the terminal rotation unit 1460 on which the detachable unit 1430 and the connection terminal 1440 are disposed may be exposed to the outside. In addition, when the terminal rotation unit 1460 rotates, the detachable unit 1430 and the connection terminal 1440 may be hidden in an internal space of the connector 1420.

With this configuration, when the coupling of the arm 1400 and the functional module 900 is unnecessary, the detachable unit 1430 and the connection terminal 1440 may be hidden inside the connector 1420.

In particular, when the robot 1 falls over, it is necessary to rotate the arm 1400 so that the connector 1420 presses against the ground, and in this case, the detachable unit 1430 and the connection terminal 1440 may come into contact with the ground, causing contamination or damage.

Accordingly, according to the arm 1400 of the present embodiment, the detachable unit 1430 and the connection terminal 1440 may be prevented from being exposed to the outside by the rotation of the terminal rotation unit 1460. In addition, it is possible to prevent the detachable unit 1430 and the connection terminal 1440 from being contaminated and damaged.

### Robot mask

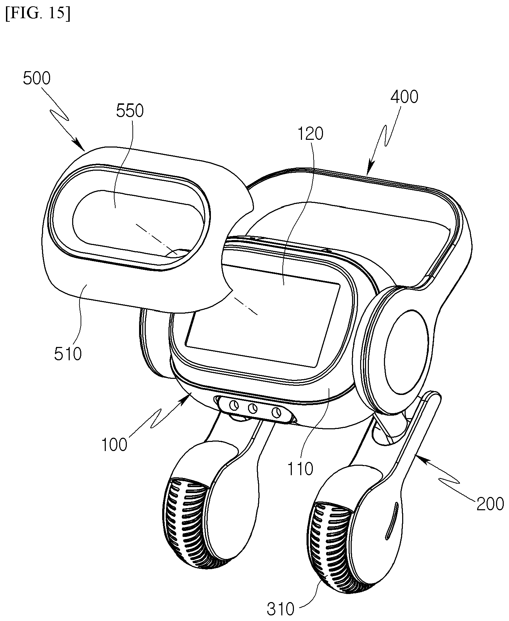

FIG. 15 is a view for describing a coupling relationship between a robot mask and a robot body in the robot according to one embodiment of the present invention.

The robot 1 according to one embodiment of the present invention may further include the robot mask 500.

The robot mask 500 may be detachably coupled to the robot body 100 and may cover the display 120. The robot mask 500 may be coupled to the robot body 100 to form the exterior of the robot 1.

Meanwhile, the robot mask 500 according to one embodiment of the present invention, when coupled to the robot body 100, may include a window 550 that exposes an image displayed on the display 120 to the outside.

The window 550 may be disposed on a mask body 510. Specifically, the window 550 may be disposed to pass through the mask body 510 and disposed at a position facing the display 120 when the robot mask 500 is coupled to the robot body 100.

The window 550 may be formed of a material that allows light to pass therethrough. For example, the window 550 may be formed of a transparent material.

Meanwhile, when the robot mask 500 is coupled to the robot body 100, a face and expression may be displayed on the display 120.

The robot 1 may display facial shapes such as eyes, nose, and mouth on the display 120 to make the user feel that the robot expresses emotions.

In this way, the robot 1 may provide a pet robot service for displaying emotions and communicating with the user and provide emotional stability to the user.

As described above, the robot 1 may visually display emotions by displaying facial expressions on the display 120 and also display emotions through a voice output of the speaker 450.

For example, a laughing sound, a surprised sound, etc. may be output in response to the facial expression displayed on the display 120.

In addition, the robot 1 may display emotions visually by showing facial expressions on the display 120 as described above and also display emotions by rotating the arm 400.

For example, the robot may display a smiling expression on the display 120 and shake the arm 400 to display emotions.

### Control configuration

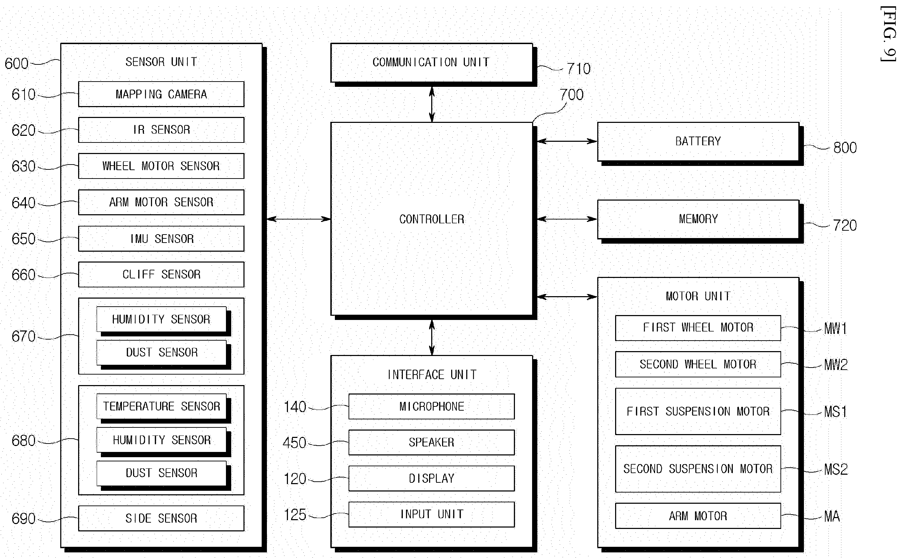

FIG. 9 is a block diagram for describing a control configuration of the robot according to one embodiment of the present invention.

Referring to FIG. 9, the robot 1 according to the embodiment of the present invention may include a sensor unit 600, a controller 700, a communication unit 710, a memory 720, the battery 800, a motor unit, and an interface unit.

Since components shown in the block diagram of FIG. 9 are not essential in implementing the robot 1, the robot 1 described herein may have a larger or fewer number of components than the components listed above.

First, the controller 700 may control the overall operation of the robot 1. The controller 700 may control the robot 1 to perform various functions according to setting information stored in the memory 720 to be described below.

The controller 700 may be disposed on the robot body 100. More specifically, the controller 700 may be mounted on a printed circuit board (PCB) disposed inside the body housing 110.

The controller 700 may include all types of devices capable of processing data, such as a processor. Here, the term "processor" may be, for example, a data processing device built into hardware, which has a physically structured circuit to perform a function expressed by code or commands included in a program. As an example of the data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present invention is limited thereto.

The controller 700 may receive information about an external environment of the robot 1 from at least one component of the sensor unit 600 to be described below. In this case, the information about the external environment may be, for example, information such as a temperature, humidity, and amount of dust in an interior where the robot 1 travels. Alternatively, the information may be, for example, cliff information. Alternatively, the information may be, for example, interior map information. Of course, the information about the external environment is not limited to the above examples.

The controller 700 may receive information about a current state of the robot 1 from at least one component of the sensor unit 600 to be described below. In this case, the current state may be, for example, tilt information of the robot body 100. Alternatively, the information may be, for example, information about a separation state between the wheel 310 and the ground. Alternatively, the information may be, for example, position information of the wheel motor MW. Alternatively, the information may be, for example, position information of the suspension motor MS. Of course, information about the current state of the robot 1 is not limited to the above examples.

The controller 700 may transmit a driving control command to at least one of components of the motor unit to be described below. The controller 700 may control the rotation of one or more of the wheel motor MW, the suspension motor MS, and the arm motor MAin order to implement one of the driving, posture maintenance, and posture change of the robot 1.

The controller 700 may receive a user's command through at least one of components of the interface unit to be described below. For example, the command may be a command for turning on/off the robot 1. Alternatively, for example, the command may be a command for manually controlling various functions of the robot 1.

The controller 700 may output information related to the robot 1 through at least one of the components of the interface unit to be described below. For example, the output information may be visual information. Alternatively, for example, the output information may be auditory information.

The motor unit may include at least one motor and provide a driving force to a component connected to each motor.

The motor unit may include the wheel motor MW for providing a driving force to the left and right wheels 310. More specifically, the motor unit may include a first wheel motor MW1 that transmits a driving force to the wheel 310 disposed on one side in the left-right direction and a second wheel motor MW2 that transmits a driving force to the wheel 310 disposed on the other side in the left-and right direction.

The wheel motors MW may be disposed in the wheel units 300, respectively. More specifically, the wheel motor MW may be accommodated inside the third link 230.

The wheel motor MW is connected to the wheel 310. More specifically, a shaft of the first wheel motor MW1 or the final output stage of the gear is connected to the wheel 310 disposed on one side in the left-right direction. A shaft of the second wheel motor MW2 or the final output stage of the gear is connected to the wheel 310 disposed on the other side in the left-right direction. Each of the left and right wheel motors MW is rotatably driven according to the control command of the controller 700, and the robot 1 travels along the ground due to the rotation of the wheel 310 according to the rotation of the wheel motor MW.

The motor unit may include the suspension motor MS for providing a driving force to the left and right leg units 200. More specifically, the motor unit may include a first suspension motor MS1 that transmits a driving force to the leg unit 200 disposed on one side in the left-right direction and a second suspension motor MS2 that transmits a driving force to the leg unit 200 disposed on the other side in the left-right direction.

The suspension motor MS may be disposed on the robot body 100. More specifically, the suspension motor MS may be disposed inside the body housing 110.

The suspension motor MS is connected to the first link 210. More specifically, a shaft of the first suspension motor MS1 or the final output stage of the gear is connected to the first link 210 disposed on one side in the left-right direction. A shaft of the second suspension motor MS2 or the final output stage of the gear is connected to the first link 210 disposed on the other side in the left-right direction. Each of the left and right suspension motors MS may be rotatably driven according to the control command of the controller 700, and the first link 210 may rotate according to the rotation of the suspension motor MS and the third link 230 connected to the first link 210 may rotate, resulting in a change in angle between the first link 210 and the third link 230 may be changed.

Accordingly, the robot 1 may lift or lower the wheel 310 and maintain a horizontal posture when climbing over obstacles or traveling along a curved ground. Alternatively, the robot body 100 may move downward or upward.

The motor unit may include the arm motor MA for providing a rotational force to the arm 400.

The arm motor MA may be disposed on the robot body 100. More specifically, at least one arm motor MA may be disposed inside the body housing 110.

The arm motor MA may be rotatably driven according to the control command of the controller 700, and the rotation coupling unit 410 may rotate according to the rotation of the arm motor MA and the connector 420 formed integrally with the rotation coupling unit 410 may rotate, resulting in pivotal movement of the arm 400 with respect to the robot body 100.

Accordingly, the robot 1 may rotate the arm 400 and may be coupled to the functional module 900 by rotating the arm 400. Alternatively, the robot 1 may rotate the arm 400 so that the arm 400 may press against the ground.

The sensor unit 600 may include at least one sensor, and each sensor may measure or detect information about an external environment of the robot 1 and/or information about a current state of the robot 1.

The sensor unit 600 may include a mapping camera 610.

The mapping camera 610 is provided to map a room in which the robot 1 travels.

To this end, the mapping camera 610 may be disposed on the front of the robot body 100. More specifically, the mapping camera 610 may be disposed on the front of the body housing 110.

The mapping camera 610 may capture an image of the room while traveling to perform simultaneous localization and mapping (SLAM). The controller 700 may implement the SLAM based on information about the surrounding environment captured by the mapping camera 610 and information about the current position of the robot 1.

Meanwhile, a method in which the robot 1 according to the embodiment of the present invention implements the SLAM may be a method implemented using only the mapping camera 610, but is not limited thereto. For example, the robot 1 may implement the SLAM also using an additional sensor. The additional sensor may be, for example, a laser distance sensor (LDS).

The sensor unit 600 may include an IR sensor 620 for detecting infrared rays.

The IR sensor 620 may be an IR camera for detecting infrared rays.

The IR sensor 620 may be disposed on the robot body 100. More specifically, the IR sensor 620 may be disposed on the front of the body housing 110. The IR sensor 620 may be disposed on left and right sides of the mapping camera 610.

The IR sensor 620 may detect infrared rays emitted by an IR LED provided on a specific module and approach the module. For example, the module may be a charging stand for charging the robot 1. For example, the module may be the functional module 900 detachably provided on the arm 400.

The controller 700 may control the IR sensor 620 to start detecting the IR LED when a charging state of the robot 1 is a preset level or less. The controller 700 may control the IR sensor 620 to start detecting the IR LED when receiving a command to find a specific module from a user.

The sensor unit 600 may include a wheel motor sensor 630.

The wheel motor sensor 630 may measure a position of the wheel motor MW. For example, the wheel motor sensor 630 may be an encoder. As is well known, the encoder may detect a position of the motor and also detect a rotational speed of the motor.

The wheel motor sensor 630 may be disposed on each of the left and right wheel motors MW. More specifically, the wheel motor sensor 630 may be connected to the shaft of the wheel motor MW or the final output stage of the gear and accommodated inside the third link 230 along with the wheel motor MW.

The sensor unit 600 may include an arm motor sensor 640.

The arm motor sensor 640 may measure a position of the wheel motor MA. For example, the arm motor sensor 640 may be an encoder. As is well known, the encoder may detect the position of the motor and also detect the rotational speed of the motor.

The arm motor sensor 640 may be disposed on the arm motor MA. More specifically, the arm motor sensor 640 may be connected to a shaft of the arm motor MA or the final output stage of the gear and accommodated inside the body housing 110 or the rotation coupling unit 410 along with the arm motor MA.

The sensor unit 600 may include an IMU sensor 650.

The IMU sensor 650 may measure a tilted angle of the robot body 100.

As is well known, the IMU sensor 650 is a sensor in which a 3-axis acceleration sensor, a three-axis gyro sensor, and a geomagnetic sensor are embedded together and is also referred to as an inertial measurement sensor.

The 3-axis acceleration sensor is a sensor for detecting a gravitational acceleration of an object in a stationary state. Since the gravitational acceleration varies depending on a tilted angle of the object, the tilted angle is obtained by measuring the gravitational acceleration. However, there is a disadvantage in that a correct value cannot be obtained in a moving acceleration state rather than a stationary state.

The 3-axis gyro sensor is a sensor for measuring an angular velocity. A tilted angle is obtained by integrating the angular velocity over the entire time. However, continuous errors occur in the angular velocity measured by the gyro sensor due to noise and other reasons, and due to these errors, an error in an integral value accumulatively occurs over time.

As a result, when a long time elapses in a stationary standby state, the tilting of the robot 1 may be accurately measured by the acceleration sensor, but an error is caused by the gyro sensor. While traveling, an accurate tilting value of the robot 1 may be measured using the gyro sensor, but a correct value cannot be obtained using the acceleration sensor.

The above disadvantages of the acceleration sensor and the gyro sensor may be supplemented using the IMU sensor.

In the present specification, hereinafter, an embodiment in which the IMU sensor is provided will be described.

The IMU sensor may be disposed on the robot body 100. More specifically, the IMU sensor may be disposed adjacent to the controller 700. The IMU sensor may be mounted on the PCB inside the robot body 100. To increase the accuracy of the measurement of the tilted angle and direction, the IMU sensor is preferably disposed close to a central area of the robot body 100.

The IMU sensor may measure at least one of the 3-axis acceleration, the 3-axis angular velocity, and the 3-axis geomagnetic data of the robot body 100 and transmit the measured data to the controller 700.

The controller 700 may calculate the tilted direction and angle of the robot body 100 using at least one of the acceleration, angular velocity, and geomagnetic data received from the IMU sensor. Based on this, the controller 700 may perform horizontal posture maintenance control of the robot body 100 to be described below.

The sensor unit 600 may include a cliff sensor 660 for detecting a cliff.

The cliff sensor 660 may be configured to detect a distance to the ground in front of the robot 1 along which it travels. The cliff sensor 660 may be configured in various ways within a range in which a relative distance between a point at which the cliff sensor 660 is formed and the ground may be detected.

For example, the cliff sensor 660 may include a light-emitting unit for emitting light and a light-receiving unit on which reflected light is incident. The cliff sensor 660 may be configured as an infrared sensor.

The cliff sensor 660 may be disposed on the robot body 100. More specifically, the cliff sensor 660 may be disposed inside the robot body 100. The cliff sensor 660 may emit light toward a front floor surface of the robot 1. The cliff sensor 660 may detect in advance whether there is a cliff in front of the robot 1 in a proceeding direction.

The light-emitting unit of the cliff sensor 660 may emit light obliquely toward the front floor surface. The light-receiving unit of the cliff sensor 660 may receive light incident by being reflected from the floor surface. A distance between the front ground and the cliff sensor 660 may be measured based on a difference between an emission time point and a reception time point of light.

When the distance measured by the cliff sensor 660 exceeds a preset value or exceeds a predetermined range, the front ground may be suddenly lowered. With this principle, a cliff may be detected.

When the cliff is detected ahead, the controller 700 may control the wheel motor MW so that the robot 1 travels while avoiding the detected cliff. In this case, control of the wheel motor MW may be stop control. Alternatively, the control of the wheel motor MW may be change control of a rotational direction.

The sensor unit 600 may include a contact detection sensor 670.

The contact detection sensor 670 may detect whether the wheel 310 has come into contact with the ground.

The contact detection sensor 670 may include a time of flight (TOF) sensor for measuring a separation distance between the wheel 310 of the robot 1 and the ground. The TOF sensor may be a three-dimensional (3D) camera to which a TOF technology is applied. As is well known, the TOF technology is a technology of measuring a distance to an object based on a round-trip flight time in which light emitted toward the object is reflected back.

The TOF sensor may be disposed on the wheel unit 300. For example, the contact detection sensor 670 may be disposed on each of the left and right third links 230. Whether the wheel 310 has come into contact with the ground may be determined using the distance to the ground measured by the TOF sensor. When the distance measured by the TOF sensor is less than a preset distance (or less than a lower limit of a preset distance range), the wheel 310 is in a state of being in contact with the ground. When the distance measured by the TOF sensor is the preset distance or more (or an upper limit or more of the preset distance range), the wheel 310 is in a state of being spaced apart from the ground.

The contact detection sensor 670 may include a load cell that measures a magnitude of a force applied to some components of the robot 1.

As is well known, when the force is applied to the load cell, a resistance value of a strain gauge provided on the surface varies. In this case, the magnitude of the force applied to the load cell may be measured by changing the resistance value.

The load cell may be disposed on the leg unit 200. Preferably, the load cell may be disposed on each of the left and right third links 230. In a state in which the wheel 310 is in a state of being in contact with the ground, the third link 230 is deformed by a normal force applied from the ground. A measurement value of the load cell appears as a value different from an initial value depending on the deformation of the third link 230. Accordingly, it may be determined whether the wheel 310 is in a state of being in contact with the ground.

The sensor unit 600 may include an environmental sensor 680.

The environmental sensor 680 may be configured to measure various environmental states outside the robot 1, that is, at home in which the robot 1 travels. The environmental sensor 680 may include at least one of a temperature sensor, a humidity sensor, and a dust sensor.

The environmental sensor 680 may be disposed on the robot body 100. More specifically, the environmental sensor 680 may be disposed behind the robot body 100. As a possible embodiment, information measured by the environmental sensor 680 may be visually displayed on the display 120.

The sensor unit 600 may include a side sensor 690.

The side sensor 690 may measure a distance to an obstacle such as a wall surface and the like.

The side sensor 690 may be configured to detect a distance to a wall surface of a side surface on which the robot 1 travels. The side sensor 690 may be configured in various ways within a range in which a relative distance between a point at which the side sensor 690 is disposed and the obstacle may be detected.

For example, the side sensor 690 may include a light-emitting unit for emitting light and a light-receiving unit on which reflected light is incident. The side sensor 690 may be configured as an infrared sensor.

The side sensor 690 may be disposed on both side surfaces of the robot 1. For example, the side sensor 690 may be disposed on the outer surface of the third link 230 of the leg unit 200.

The interface unit may include at least one component for interaction between the user and the robot 1, and each component may be provided to input a command from the user and/or output information to the user.

The interface unit may include a microphone 140.

The microphone 140 is a component for recognizing the user's voice and may be provided as a plurality of microphones. The plurality of microphones 140 may be disposed in the body housing 110. For example, four microphones 140 may be disposed on an upper side of the body housing 110.

A voice signal received by the microphone 140 may be used to track the user's position. In this case, a known sound source tracking algorithm may be applied. For example, the sound source tracking algorithm may be a three-point measurement method (triangulation method) using a time difference in which the plurality of microphones 140 receive voice signals. The principle is that a position of the voice source is calculated using a position of each microphone 140 and a speed of a sound wave.

Meanwhile, when the microphone 140 cooperates with the mapping camera 610, the robot 1 may be implemented to find the user's position even when the user calls the robot 1 from a distance.

The interface unit may include the speaker 450.

The speaker 450 may be disposed on the arm 400. For example, the speaker 450 may be disposed on the rotation coupling unit 410 of the arm 400. The speakers 450 may be respectively disposed at positions covering both left and right sides of the body housing 110.

The speaker 450 may transmit information about the robot 1 as sound. The source of the sound transmitted by the speaker 450 may be sound data previously stored in the robot 1. For example, the pre-stored sound data may be voice data of the robot 1. For example, the pre-stored sound data may be a notification sound that guides the state of the robot 1. Meanwhile, the source of the sound transmitted by the speaker 450 may be sound data received through the communication unit 710.

The interface unit may include the display 120 and the input unit 125.

The display 120 may include a display disposed in one or more modules. The display 120 may be disposed at an upper front side of the robot body 100.

The display 120 may be formed as one element of an LED, an LCD, a plasma display panel, and an OLED.

The display 120 may display information such as operating time information of the robot 1, battery 800 power information, etc.

The display 120 may display a facial expression of the robot 1. Alternatively, the display 120 may display the pupils of the robot 1. A current state of the robot 1 may be represented by an emotion personified through the shape of the face or the shape of the pupils displayed on the display 120. For example, when the user goes out and returns home, the display 120 may display a smiling facial expression or smiling eye shape. Accordingly, the user may feel the interaction with the robot 1.

The input unit 125 may be configured to receive a control command for controlling the robot 1 from the user. For example, the control command may be a command for changing various settings of the robot 1. For example, the settings may be voice volume, display brightness, power saving mode settings, etc.

The input unit 125 may be disposed on the display 120.

The input unit 125 generates key input data input by the user to control the operation of the robot 1. To this end, the input unit 125 may be composed of a key pad, a dome switch, a touch pad (static pressure/electrostatic), etc. In particular, when the touch pad forms a layered structure with the first display, which may be referred to as a touch screen.

The communication unit 710 may be provided to transmit signals between internal components of the robot 1. The communication unit 710 may support, for example, controller area network (CAN) communication. The signals may be, for example, control commands transmitted from the controller 700 to another component.

The communication unit 710 may support wireless communication with other devices present outside the robot 1. A short-range communication module or a long-range communication module may be provided as a wireless communication module for supporting wireless communication.

The short-range communication may be, for example, Bluetooth communication, near field communication (NFC), etc.

The long-range communication may be, for example, wireless LAN (WLAN), digital living network alliance (DLNA), wireless broadband (Wibro), world interoperability for microwave access (WiMAX), global system for mobile communication (GSM), code division multi access (CMDA), CDMA2000, enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTEA), wireless mobile broadband service (WMBS), Bluetooth low energy (BLE), Zigbee, radio frequency (RF), long range (LoRa), etc.

The memory 720 is a component for storing various data for driving and operating the robot 1.

The memory 720 may store an application program and various data for autonomous driving of the robot 1. The memory 720 may also store data sensed by the sensor unit 600 and setting information for various settings selected or input by the user.

The memory 720 may include magnetic storage media or flash storage media, but the scope of the present invention is not limited thereto. The memory 720 may include an internal memory and/or an external memory and include volatile memories such as a DRAM, an SRAM, or an SDRAM, non-volatile memories such as a one-time programmable ROM (OTPROM), a PROM, an EPROM, an EEPROM, a mask ROM, a flash ROM, a NAND flash memory, or a NOR flash memory, flash drives such as an SSD, a compact flash (CF) card, a SD card, a Micro-SD card, a Mini-SD card, an XD card, or a memory stick, or storage devices such as a HDD.

The memory 720 may be included in the controller 700 or provided as a separate component.

The battery 800 is configured to supply power to other components constituting the robot 1.

The battery 800 may be disposed on the robot body 100. More specifically, the battery 800 may be accommodated inside the body housing 110. Although not shown, the battery 800 may be disposed behind the suspension motor MS.

The battery 800 may be charged by an external power source, and to this end, the charging terminal 130 for charging the battery 800 may be provided on one side of the robot body 100. As in the embodiment of the present invention, the charging terminal 130 may be disposed on a lower portion of the robot body 100. Accordingly, the robot 1 can be easily coupled to the charging stand by approaching the charging stand and moving downward so that the charging terminal 130 is seated on the corresponding terminal of the charging stand from above.

### Basic traveling posture of robot

The robot 1 may travel on the ground in a preset basic posture as shown in FIG. 1. The basic posture may be a posture of the robot 1 in a state in which a specific event does not occur. The specific event may be caused by a change in the external environment in which the robot 1 travels, a control command of the user, or whether the robot 1 satisfies or dissatisfies a preset condition.

In the basic posture, the connector 420 of the arm 400 may be disposed above the robot body 100. More specifically, in the basic posture, the connector 420 may be disposed farther from the ground than the robot body 100. With this configuration, the user can easily lift the robot 1 by gripping the connector 420. This can help the user easily carry the robot 1 and quickly move the robot 1 to another space. That is, the arm 400 may be provided as a handle to the user.

In the basic posture, the connector 420 of the arm 400 may be disposed behind the robot body 100. Preferably, the connector 420 may be disposed behind the robot mask 500 in the basic posture. Accordingly, when the user views the robot 1, the robot mask 500 can be prevented from being covered by the arm 400, thereby reducing the visibility of the display.

In the basic posture, the robot 1 may perform balance control to prevent it from falling forward or backward. In this case, the balance control is control to rotate the wheel motor MW according to a degree of tilting of the robot 1 to rotate the wheel 310 forward or backward.

When the robot 1 tilts forward more than the tilting of the preset basic posture, the wheel motor MW may be rotated the wheel 310 backward so that the robot 1 returns to the basic posture.

When the robot 1 tilts backward more than the tilting of the preset basic posture, the wheel motor MW may be rotated the wheel 310 forward so that the robot 1 returns to the basic posture.

Meanwhile, as described above, the degree of the tilting of the robot 1 may be measured by the IMU sensor 650.

The robot 1 may travel on the ground using the rotation of the wheel 310 while maintaining the above basic posture, and then perform a posture change to a specific posture different from the above basic posture.

The posture change may be performed when a specific preset event occurs or when a specific preset condition is satisfied.

In the embodiment of the present invention, the posture change of the robot 1 is a change from a basic posture to a specific posture or a change from the specific posture to the basic posture (hereinafter, may also be referred to as a return to the basic posture).

In the robot 1 according to the embodiment of the present invention, when such a posture change is performed, the rotation of the arm 400 may be necessarily performed. In this case, the operation in which the position of the connector 420 is changed by the rotation of the arm 400 may be involved.

In the embodiment of the present invention, the leg unit 200 of the robot 1 may include an upper link and a lower link.

The upper link may be defined as a concept including the first link 210 and the second link 220, which are linkages disposed on the robot body 100. The lower link may be defined as a concept including the third link 230, which is a linkage disposed on the wheel 310.

The upper link and the lower link may be link-coupled to form a joint structure. Through the movement of the joint structure, the robot body 100 may move upward or downward during traveling.

More specifically, the upper link and the lower link may maintain a constant coupling angle in the basic posture of the robot 1. Here, the coupling angle of the upper link and the lower link may be a coupling angle between the first link 210 and the third link 230. The coupling angle may be an acute angle formed by the first link 210 and the third link 230 based on the connection point of the first link 210 and the third link 230.

The adjustment of the coupling angle, that is, the movement of the joint structure may be implemented by controlling the driving of the suspension motor MS. As the suspension motor MS rotates and the coupling angle decreases, the robot body 100 may move downward toward the ground. As the suspension motor MS rotates and the coupling angle increases, the robot body 100 may move upward in a direction opposite to the ground.

Meanwhile, as described above, in the basic posture of the robot 1, the coupling angle may be maintained at a value set by the restoring force of the gravity compensator. Since the restoring force of the gravity compensator acts, the rotation of the suspension motor MS to maintain the basic posture is unnecessary.

### Change from basic posture to standby posture

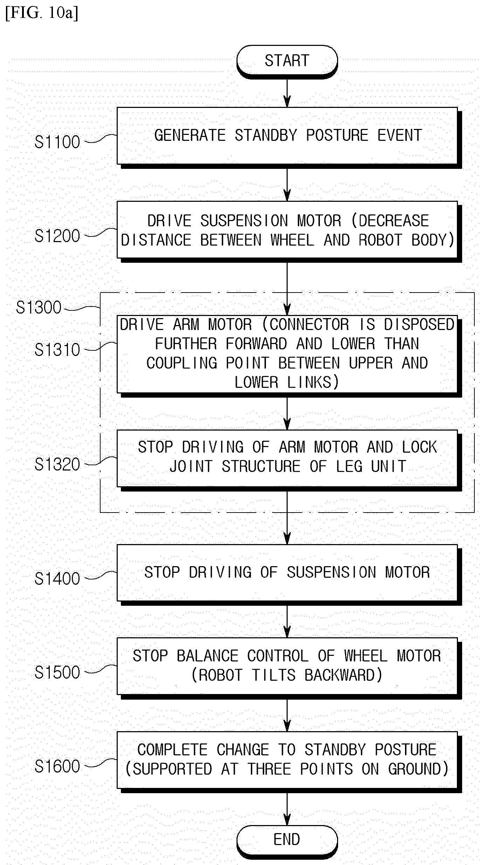

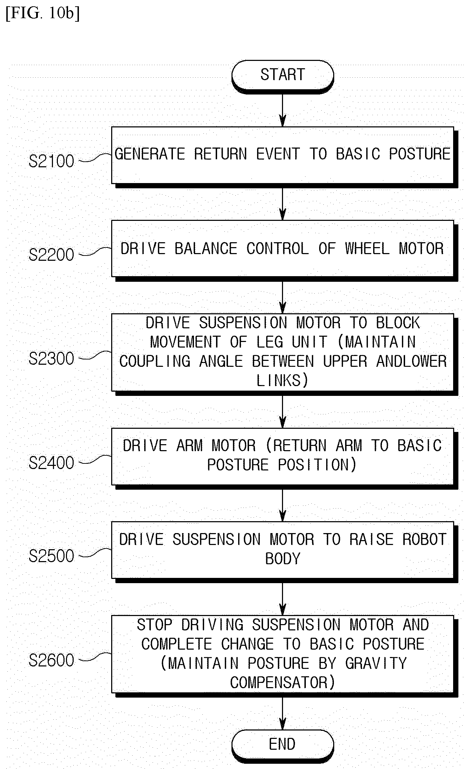

FIGS. 10A and 10B are flowcharts showing a first embodiment of control methods related to a posture change of a robot.

More specifically, FIGS. 10A and 10B show an embodiment of control methods when a posture of a robot is changed between a basic posture and a standby posture. FIG. 10A shows a flowchart of a control method of changing a robot's posture from a basic posture to a standby posture, and FIG. 10B shows a flowchart of a control method of returning a robot from a standby posture back to a basic posture.

In the present embodiment, the control method may be a method in which the controller 700 controls the rotation of various motors included in the robot 1.

As described above, the robot 1 according to the embodiment of the present invention may include the wheel motor MW for rotating the wheels 310 respectively disposed on the left and right sides of the robot body 100, the suspension motor MS for adjusting a coupling angle between the upper link and the lower link of the leg unit 200 connected between the wheel 310 and the robot body 100, and an arm motor MA for rotating the integrated arm 400 simultaneously connected to both left and right side surfaces of the robot body 100.

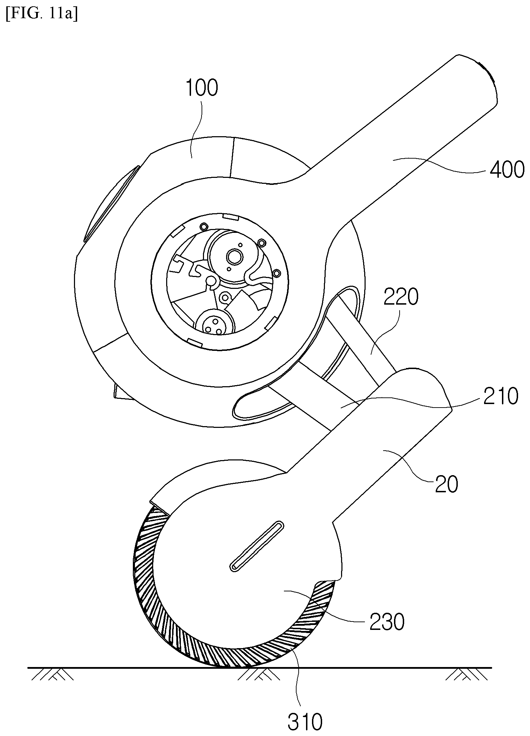

First, a control method for a case in which the robot 1 travels in the basic posture and is then changed to the standby posture will be described with reference to FIG. 10A. FIGS. 11A to 11D sequentially show the operation form of the robot 1 when changing from the basic posture to the standby posture.

The control method of changing a robot's posture from a basic posture to a standby posture may include an operation S 1100 of generating a standby posture event.

More specifically, the standby posture event may occur while the robot 1 travels or is stopped in the basic posture.

Here, the standby posture event is an event that triggers a change from a basic posture to a standby posture and may correspond to a case in which, for example, a command to enter a standby posture is input by a user. Alternatively, this may be, for example, a case in which a preset time has passed without a specific command from the user being input. That is, the standby posture event may occur when there is no need to perform the posture balance control of the robot 1 by driving the wheel motor MW and occur in various situations not limited to the above example.

The control method of changing a robot's posture from a basic posture to a standby posture may further include an operation S 1200 of driving the suspension motor MS.

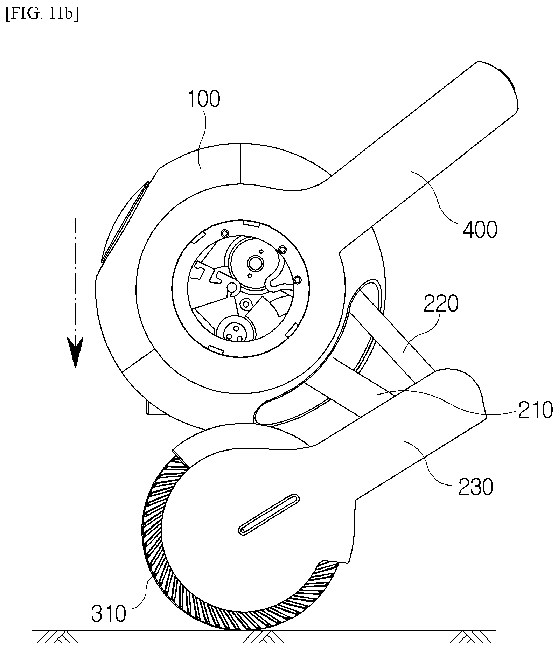

More specifically, further referring to FIGS. 11A and 11B along with FIG. 10A, the suspension motor MS may be driven in the basic posture shown in FIG. 11A to reduce a distance between the wheel 310 and the robot body 100 as shown in FIG. 11B.

In the operation S 1200, the coupling angle between the upper link and the lower link of the leg unit 200 may be smaller than that of the basic posture. Specifically, in operation S 1200, both the coupling angle between the first link 210 and the third link 230 and the coupling angle between the second link 220 and the third link 230 may be decreased.

Through such an operation, the overall center of gravity of the robot 1 may be lowered. Accordingly, the robot 1 can maintain the posture more stably after changed to the standby posture. This is because the possibility of losing the center and falling is higher when the center of gravity is positioned lower rather than higher.

Since the operation S1200 is performed before the next operation, that is, the operation S1300 of driving the arm motor MA, is performed, the connector 420 may completely surround the end portion of the wheel 310 of the leg unit 200 when the arm 400 rotates in the next operation.

**In** the embodiment of the present invention, a case in which the operation S1200 of driving the suspension motor MS and the operation S1300 of driving the arm motor MA are sequentially performed is described representatively, but in other embodiments, the two operations may be performed simultaneously. That is, as the robot body 100 moves downward and at the same time, the arm 400 rotates, the arm 400 may surround the leg unit 200 simultaneously with the robot body 100 being in a maximally lowered state.

The control method of changing a robot's posture from a basic posture to a standby posture may further include an operation S1300 of driving the arm motor MA.

**In** the operation S1300, the arm motor MA may rotate in a direction in which the arm 400 approaches the ground.

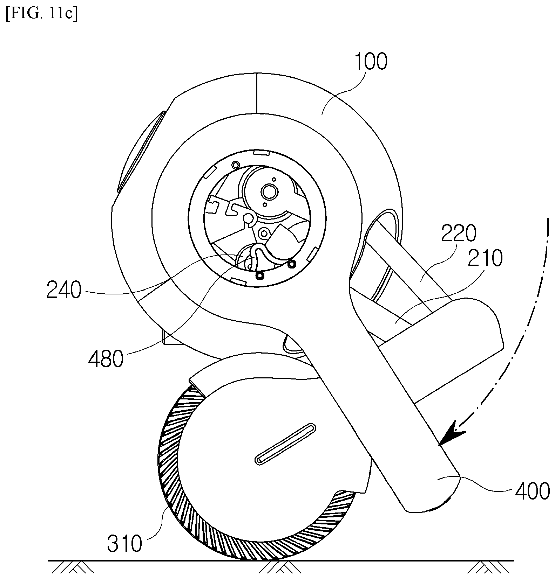

**In** the operation S1300, the arm motor MA may rotate backward. By the backward rotation of the arm motor MA, the arm 400 positioned at the upper rear side of the robot body 100 may rotate downward across the rear of the robot body 100 (see FIG. 11C).

**In** this case, the rotational direction of the arm motor MA and the arm 400 may be defined as a first direction. The first direction may be clockwise based on a state in which the robot 1 is viewed from the right side.

The connector 420 of the arm 400 may be rotated closer to the ground than a lower end portion of the first link 210 and a lower end portion of the second link 220. The connector 420 may be disposed closer to the ground than an upper end portion of the third link 230.

From another perspective, the connector 420 may be disposed lower and further forward than a link coupling point of the upper link and the lower link.

From still another perspective, an outer end portion of the connector 420 may be disposed closer to the ground than the joint portion in which the first link 210 and the third link 230, and the second link 220 and the third link 230 are coupled.

When the present operation is performed, it may appear as if the robot 1 is scooching down.

Meanwhile, in the embodiment of the present invention, the rotation coupling unit 410 of the arm 400 is configured in a structure in which the left rotation coupling unit is disposed leftward more than the left leg unit, the right rotation coupling unit is disposed rightward more than the right leg unit, and the left and right leg units are connected by the connector 420 (see FIG. 2)

That is, when the connector 420 is disposed lower and further forward than the link connection point of the upper and lower links due to the operation of the arm 400 rotating backward, the arm 400 may be formed in a form of surrounding the left and right leg units 200 from the outside.

In this way, since the integrated left and right arms 400 is formed in a shape that surrounds the leg units 200 from the outside, even when a force (a restoring force of the gravity compensator) is applied in a direction in which the coupling angle of the upper and lower links increases, the movements of the leg units 200 is restricted.

Accordingly, when the robot 1 is scooching down, the driving of the suspension motor MS can be stopped and power consumption can be reduced.

In the present operation, the rotation of the arm motor MA may be performed up to a position at which the stopper 240 comes into contact with the rotation protrusion 480 and the rotational range of the arm 400 is restricted. That is, when the arm 400 rotates to a point at which the stopper 240 comes into contact with the rotation protrusion 480, the driving of the arm motor MA may be stopped. That is, the additional rotation of the arm 400 may be limited by the contact between the rotation protrusion 480 of the arm 400 and the stopper 240.

When the rotation protrusion 480 comes into contact with the stopper 240, the movement of the joint structure of the leg unit 200 may be restricted. More specifically, since the stopper 240 may be formed in a shape that surrounds at least a portion of the rotation protrusion 480, that is, in a shape corresponding to the exterior of the rotation protrusion 480, when the stopper 240 comes into contact with the rotation protrusion 480, the stopper 240 may be engaged with the rotation protrusion 480 while surrounding a portion of the exterior of the rotation protrusion 480.

**In** the present embodiment, unless the arm 400 rotates in the opposite direction, the movement of the joint of the leg unit 200 is restricted by the engagement structure of the stopper 240 and the rotation protrusion 480.

The control method of changing a robot's posture from a basic posture to a standby posture may further include an operation S1400 of stopping the driving of the suspension motor MS.

Preferably, the operation S1400 may be performed after the operation S1300 of driving the arm motor MA.

**In** the operation S1400, the driving of the suspension motor MS is stopped in a state in which the movement of the joint structure of the leg unit 200 is restricted. Since the movement of the leg unit 200 was restricted by the engagement of the stopper 240 and the rotation protrusion 480 in the previous operation, the coupling angle of the leg unit 200 does not increase even when the driving of the suspension motor MS is stopped. That is, since the suspension motor MS no longer needs to be driven, the driving control is stopped in the operation S 1400, and unnecessary power consumption can be reduced.

The control method of changing a robot's posture from a basic posture to a standby posture may further include an operation S1500 of stopping the driving of the wheel motor MW.

**In** the present operation, when the driving of the wheel motor MW is stopped, the robot 1 may tilt backward.

More specifically, the overall center of gravity of the robot 1 is disposed behind the center of rotation of the wheel 310 by the operations up to the previous operation.

Accordingly, when the rotation of the wheel 310 is stopped in this state, that is, when the balance control performed by the rotation operation of the wheel 310 is stopped, the robot 1 tilts backward. From another perspective, the operation of the robot 1 lying down backward may be performed.

The control method of changing a robot's posture from a basic posture to a standby posture may include an operation S1600 of performing a change to a standby posture.

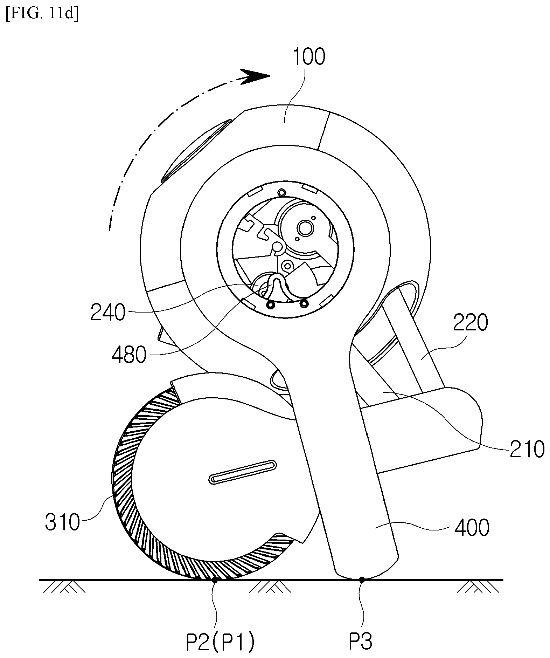

**In** the present operation, the robot 1 may be supported at three points on the ground (see FIG. 11D).

As the driving of the wheel motor MW is stopped in the previous operation, the robot 1 tilts backward and stops when the connector 420 of the arm 400 comes into contact with the ground.

The robot 1 is supported by the ground by the left and right wheels 310 and the connector 420. A contact point between the left wheel and the ground may be defined as a first contact portion **P1,** a contact point between the right wheel and the ground may be defined as a second contact portion P2, and a contact point between the connector 420 and the ground may be defined as a third contact portion P3 (see FIG. 11D).

Of course, since the connector 420 of the arm 400 is formed to extend in a left-right direction so as to connect the left and right rotation coupling units 410, the third contact portion P3, which is the contact point with the ground, may also be formed to extend in the left-right direction.

The three contact portions P1, P2, and P3 may be portions in which different components of the robot 1 come into contact with the ground. Here, since the left and right wheels 310 of the robot 1 come into contact with the ground, the three contact portions P1, P2, and P3 may be formed additionally in contact with the ground by components of the robot 1 other than the wheels 310.

In addition, the three contact portions P1, P2, and P3 may be formed in a form in which the mechanical components of the robot 1 come into contact with the ground and are spatially separated.

In this case, the load of the robot body 100 presses the leg unit 200 and at the same time, the rotation protrusion 480 and the stopper 240 are supported in contact with each other and engaged, thereby preventing the leg unit 200 from being unfolded. That is, even when the driving of the suspension motor MS is stopped, the corresponding posture may be maintained.

In addition, in this case, since the robot 1 is supported at three points on the ground, the robot 1 can maintain balance without falling in any direction. That is, even when the driving of the wheel motor MW is stopped, the corresponding posture may be maintained.

That is, in a state of being changed to the standby posture, the robot 1 may maintain the posture without any motor included in the robot 1 being driven.

That is, compared to a case in which the robot 1 needs to continuously rotate a pair of wheels to stand by in the basic posture (balance control), unnecessary power consumption can be significantly reduced in the standby posture.

Meanwhile, in the standby posture, the robot body 100 does not completely tilt backward, but is formed in a form that sits while supported by the ground using the arm 400, and thus the center of gravity of the robot body 100 moves only a small distance downward and backward compared to the basic posture.

This enables a change in relatively fast posture when the robot 1 is restored back to the basic posture.

Next, a control method for a case in which the robot 1 in the standby posture is restored back to the basic posture will be described with reference to FIG. 10B as follows.

In the case of restoring from the standby posture to the basic posture, control may be performed in the reverse order of the posture change from the basic posture to the standby posture.

The control method of returning a robot's posture from a standby posture to a basic posture may include an operation S2100 of generating a return event to a basic posture.

Here, the return to the basic posture event means an event that triggers the transition from the standby posture to the basic posture, and may, for example, correspond to a case in which a command to return to the basic posture is input by the user. Alternatively, this may be, for example, a case in which a command to perform a specific operation (such as carrying an object) rather than a posture return command is input by the user. To perform the user's command, the return to the basic posture needs to be first performed.

That is, the return event to the basic posture may occur when there is a need to re-perform the posture balance control of the robot 1 by driving the wheel motor MW and occur in various situations not limited to the above example.

The control method of returning a robot's posture from a standby posture to a basic posture may further include a balance control driving operation S2200 of the wheel motor MW.

More specifically, the wheel motor MW is driven so that the wheel 310 rotates forward in the standby posture. Accordingly, the center of gravity of the robot body 100 moves forward, and the support form between the robot 1 and the ground is changed from three-point support by the left and right wheels 310 and the connector 420 to two-point support by the left and right wheels 310. That is, as the robot body 100 moves forward, the connector 420 is spaced apart from the ground (changed from the form of FIG. 11D to the form of FIG. 11C)

The control method of returning a robot's posture from a standby posture to a basic posture may further include an operation S2300 of blocking the movement of the leg unit 200.

More specifically, the suspension motor MS may be driven in a state in which the arm 400 still surrounds the leg unit 200 to control the current coupling angle of the upper and lower links to be maintained.

When the suspension motor MS is not driven to control the coupling angle of the upper and lower links to be maintained, the joint of the leg unit 200 may be suddenly unfolded when the arm motor MA is driven in the next operation, causing the robot 1 to momentarily lose its center of gravity and fall on the ground.

The operation S2300 is an operation performed to prevent such a problem, and the suspension motor MS may be driven first before the arm motor MA is driven to maintain the coupling angle of the leg unit 200 in a folded state.

The control method of returning a robot's posture from a standby posture to a basic posture may further include an operation S2400 of driving the arm motor MA.

More specifically, in a state in which the suspension motor MS is driven to maintain the leg unit 200 in a folded state, the arm motor MA may be rotated in a second direction (counterclockwise when viewing the robot 1 from the right side) so that the arm 400 may be lifted (changed from the form of FIG. 11C to the form of FIG. 11B).

In this case, the release of contact and/or the release of the engagement structure between the stopper 240 and the rotation protrusion 480 may be performed so that the leg unit 200 may be unlocked. However, since the suspension motor MS is being driven, the leg unit 200 is not suddenly unfolded.

The arm motor MA may be controlled to be stopped when the arm 400 is rotated to a specified position in the basic posture of the robot 1.

The control method of returning a robot's posture from a standby posture to a basic posture may further include an operation S2400 of moving the robot body 100 upward.

More specifically, when the arm 400 returns to the position in the basic posture, the suspension motor MS may be driven to control the coupling angle of the upper and lower links to increase.

In this case, the robot body 100 implements a posture change as if it is standing up while stretching its legs when moving upward in a direction opposite to the ground (changed from the form of FIG. 11B to the form of FIG. 11A).

The suspension motor MS may be controlled to be stopped when the robot body 100 moves upward to a specified height in the basic posture.

The control method of returning a robot's posture from a standby posture to a basic posture may further include an operation S2600 of completing the change to the basic posture.

As described above, the restoring force of the gravity compensator and the gravity due to the robot body 100 may cancel each other out. That is, the coupling angle of the upper and lower links in the basic posture is maintained.

Accordingly, after the robot body 100 moves upward to the height of the basic posture, the constant height of the robot body 100 may be maintained even when the suspension motor MS is stopped.

### Return from fallen posture to basic posture

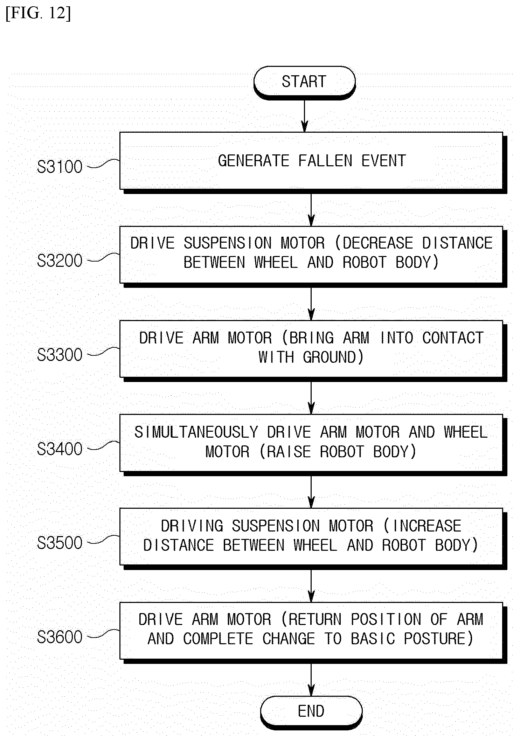

Hereinafter, a method of returning to a basic posture when the robot 1 loses its center and falls on the ground will be described with reference to FIGS. 12 to 14.

FIG. 12 is a flowchart showing a second embodiment of a control method related to a posture change in the robot 1.

The second embodiment shows an embodiment of a control method when the posture of the robot 1 according to the embodiment of the present invention is changed from a fallen posture to a basic posture.

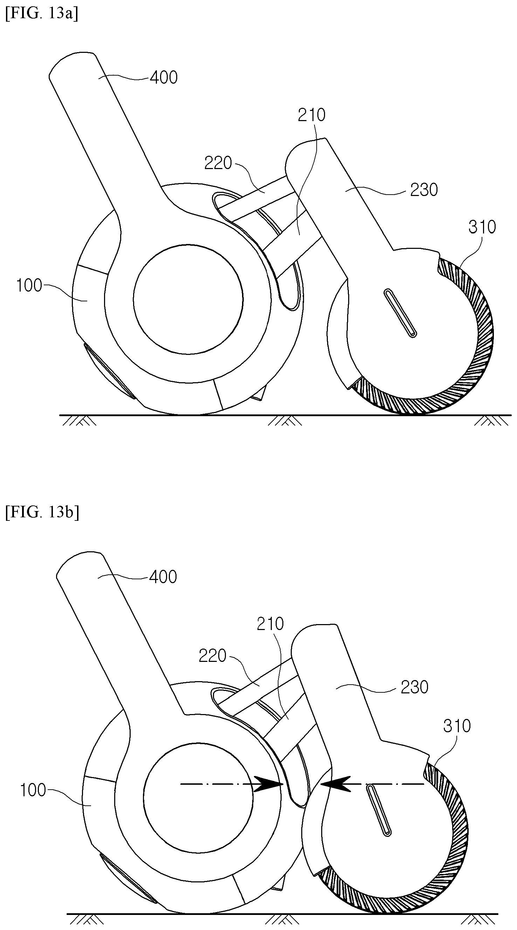

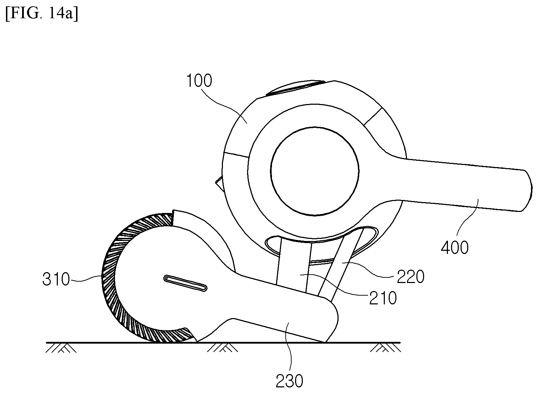

FIGS. 13A to 13F sequentially show operation forms of the robot for returning to the basic posture in case of falling forward. FIGS. 14A to 14E sequentially show operation forms of the robot for returning to the basic posture in case of falling backward.

The control method of changing a robot's posture from a fallen posture to a basic posture may include an operation S3100 of generating a fallen event.

Here, the fallen event refers to a situation in which the robot 1 has a fallen posture on the ground. The robot 1 may lose its center and fall on the ground and the robot body 100 may tilt forward or backward beyond a preset angle with respect to the ground to fall due to various causes, such as when an external force is applied to the robot 1, when the robot 1 is caught on an obstacle while traveling, when the robot 1 slips on the ground, or when a malfunction occurs in the robot 1.

The fallen posture may be defined as a state in which another component other than the left and right wheels 310 of the robot 1 comes into contact with the ground. Alternatively, the fallen posture may be defined as a state in which another component other than the left and right wheels 310 and the arm 400 of the robot 1 comes into contact with the ground. The reason why the case in which the arm 400 comes into contact with the ground is excluded from the fallen posture is that both the arm 400 and the wheel 310 may be in contact with the ground when the robot 1 is changed to the standby posture.

More specifically, for example, the state in which the robot 1 falls forward may be a state in which the robot body 100 tilts forward and at least a portion of the front of the robot body 100 comes into contact with the ground (see FIG. 13A).

For example, the state in which the robot 1 falls backward may be a state in which the robot body 100 tilts backward and at least a portion of the leg unit 200 of the robot body 100 and/or the rear of the robot body 100 comes into contact with the ground (see FIG. 14A).

The control method of changing a robot's posture from a fallen posture to a basic posture may include an operation S3300 of bringing the arm 400 into contact with the ground.

More specifically, the arm motor MA may rotate the arm 400 until the connector 420 of the arm 400 comes into contact with the ground.

Meanwhile, in the operation S3300, the rotational direction of the arm motor MA may vary depending on the direction in which the robot 1 falls.

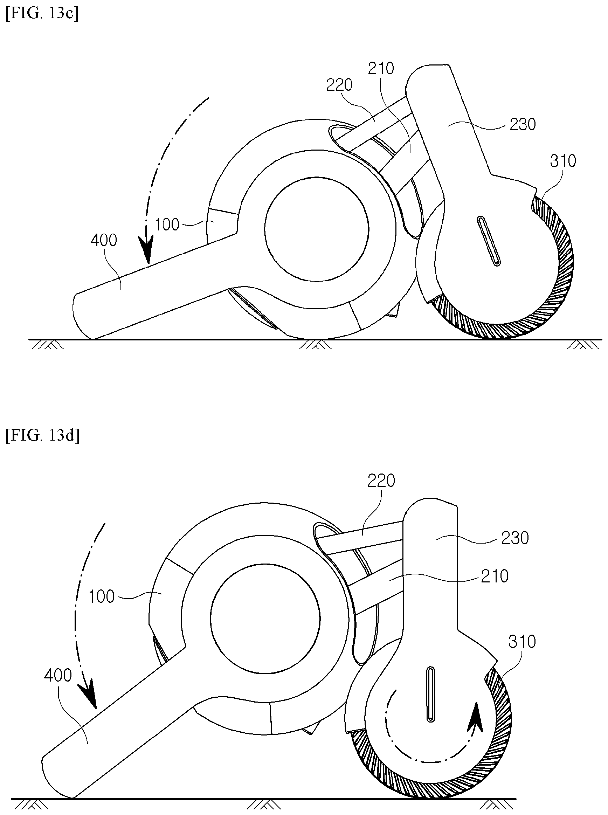

When the robot 1 falls forward, the arm motor MA may rotate forward. Accordingly, the arm 400 may also rotate forward (see FIG. 13C). From another perspective, the arm 400 may rotate in the direction toward the mask 500. From still another perspective, the arm 400 may rotate in the second direction. **In** the embodiment of the present invention, the second direction is a counterclockwise direction when viewed from the right side with respect to the front of the robot 1.

**In** a state in which the arm 400 rotates forward (or in the direction toward the mask 500 or in the second direction) and ultimately comes into contact with the ground, the center of gravity of the robot body 100 may be disposed between the contact point of the arm 400 and the ground and the contact point of the wheel 310 and the ground.

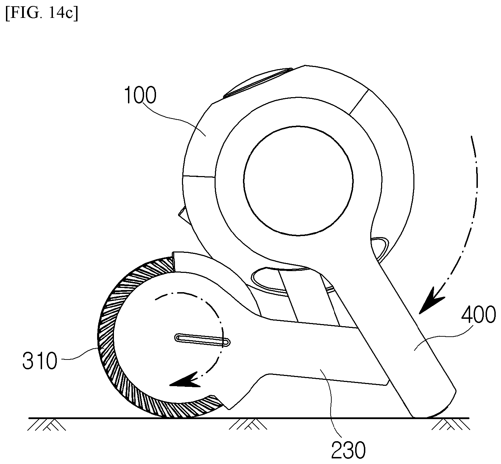

When the robot 1 falls backward, the arm motor MA may rotate backward. Accordingly, the arm 400 may also rotate backward (see FIG. 14C). From another perspective, the arm 400 may rotate in a direction away from the mask 500. From still another perspective, the arm 400 may rotate in the first direction. **In** the embodiment of the present invention, the first direction is a direction opposite to the second direction and is a clockwise direction when viewed from the right side with respect to the front of the robot 1.

**In** a state in which the arm 400 rotates backward (or in the direction away from the mask 500 or in the first direction) and ultimately comes into contact with the ground, the center of gravity of the robot body 100 may be disposed between the contact point of the arm 400 and the ground and the contact point of the wheel 310 and the ground.

To summarize, regardless of whether the robot 1 falls forward or backward and the rotational direction of the arm motor MA, in a state in which the arm 400 comes into contact with the ground, the center of gravity of the robot body 100 is disposed between the contact point of the wheel 310 and the ground and the contact point of the arm 400 and the ground.

Accordingly, in the operation S3300, the arm 400 and the wheel 310 are cooperatively driven to prepare a posture for lifting the robot body 100.

The control method of changing a robot's posture from a fallen posture to a basic posture may further include an operation S3400 of moving the robot body 100 upward. In the operation S3400, the robot body 100 may be moved upward by simultaneous driving of the arm motor MA and the wheel motor MW.

More specifically, a case in which the robot 1 falls forward will be described first.

The arm motor MA may rotate in the same direction as in the previous operation S3300, that is, forward. The rotation of the arm motor MA in the previous operation S3300 and the operation S3400 may be performed continuously, or the rotation of the arm motor MA may be stopped for a moment and then re-rotated in a state in which the arm 400 comes into contact with the ground. That is, the rotational direction of the arm motor MA in the operations S3300 and S3400 may be the same, and the rotation thereof may be sequentially performed with a time difference.

In this case, the arm motor MA and the wheel motor MW cooperate with each other to push the robot body 100 up. Since the coupling angle of the leg unit 200 is fixed and one end of the arm 400 is in contact with the ground, the robot body 100 is lifted upward (see FIG. 13D).

In this case, the contact point of the arm 400 and the ground and the contact point of the wheel 310 and the ground gradually become closer.

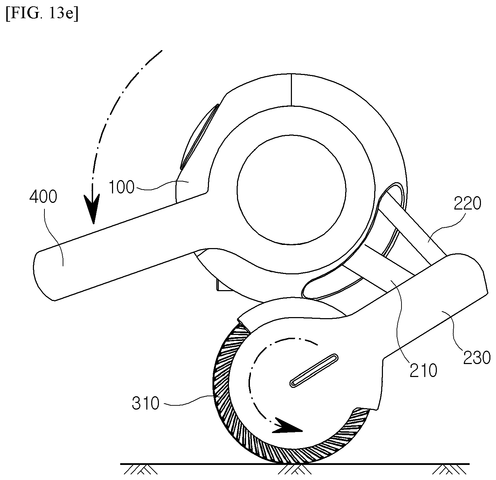

As the wheel 310 continuously rotates forward, the arm 400 and the wheel 310 continuously gets closer, and at some point, the arm 400 is separated from the ground, and the center of rotation of the rotation coupling unit 410 is positioned vertically above the center of rotation of the wheel 310 (see FIG. 13E).

From this point, the balance control of the robot 1 may start.

When the arm 400 is separated from the ground, the arm 400 no longer needs to rotate toward the wheel 310, and thus the driving of the arm motor MA is stopped.

Next, a case in which the robot 1 falls backward will be described.

The arm motor MA may rotate in the same direction as in the previous operation S3300, that is, backward. The rotation of the arm motor MA in the previous operation S3300 and the operation S3400 may be performed continuously, or the rotation of the arm motor MA may be stopped for a moment and then re-rotated in a state in which the arm 400 comes into contact with the ground. That is, the rotational direction of the arm motor MA in the operations S3300 and S3400 may be the same, and the rotation thereof may be sequentially performed with a time difference.

In this case, the arm motor MA and the wheel motor MW cooperate with each other to push the robot body 100 up. Since the coupling angle of the leg unit 200 is fixed and one end of the arm 400 is in contact with the ground, the robot body 100 is lifted upward (see FIG. 14C).

In this case, the contact point of the arm 400 and the ground and the contact point of the wheel 310 and the ground gradually become closer.

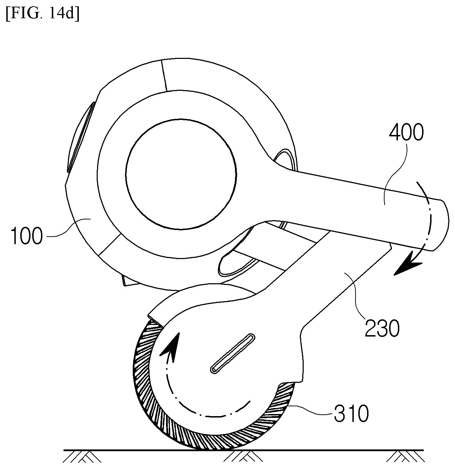

As the wheel 310 continuously rotates backward, the arm 400 and the wheel 310 continuously gets closer, and at some point, the arm 400 is separated from the ground, and the center of rotation of the rotation coupling unit 410 is positioned vertically above the center of rotation of the wheel 310 (see FIG. 14D).

From this point, balance control may start.

When the arm 400 is separated from the ground, the arm 400 no longer needs to rotate toward the wheel 310, and thus the driving of the arm motor MA is stopped.

As a possible embodiment, the control method of changing a robot's posture from a fallen posture to a basic posture may further include an operation S3200 of decreasing a distance between the wheel 310 and the robot body 100.

The operation S3200 may be performed before the operation S3300 of bringing the arm 400 into contact with the ground.

More specifically, when the robot 1 falls on the ground, the suspension motor MS may be rotated in a direction in which the distance between the wheel 310 and the robot body 100 decreases. **In** this case, the coupling angle of the upper and lower links gradually decreases due to the rotation of the suspension motor MS.

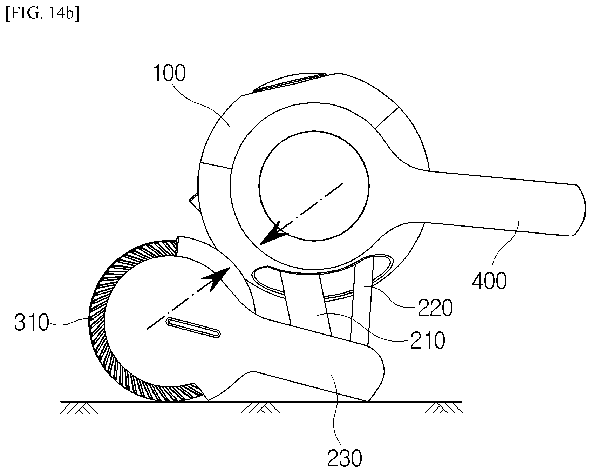

**In** the operation S3200, the suspension motor MS may be rotated until the coupling angle becomes the minimum angle. That is, the suspension motor MS is rotated until the robot body 100 and the wheel 310 become as close as possible (see FIGS. 13B and 14B).

Through such a process, the coupling angle of the upper and lower links may be fixed to a predetermined angle (minimum angle). This can prevent the rotational torque of the wheel motor MW from being used to change the coupling angle of the leg unit 200 in a subsequent operation and can be used only to restore the robot body 100 to the basic posture.

When the robot 1 performs an operation in which it stands up in a state in which the coupling angle of the upper and lower links is larger than the minimum angle, the rotational torque of the wheel 310 is partially used to reduce the coupling angle of the upper and lower links. That is, a large force is required for the robot 1 to stand up.

Furthermore, when the gravity compensator is provided, the rotational torque of the wheel 310 is subjected to the resistance of the restoring force by the gravity compensator. Even in the case, a large force is required for the robot 1 to stand up.

As a possible embodiment the control method of changing a robot's posture from a fallen posture to a basic posture may further include an operation S3500 of increasing the distance between the wheel 310 and the robot body 100.

The operation S3500 is performed in the embodiment in which the operation S3200 is performed.

When the operation S3200 is performed, the distance between the wheel 310 and the robot body 100 is maintained to a minimum, and thus the distance between the wheel 310 and the robot body 100 needs to be increased again in order to return to the basic posture.

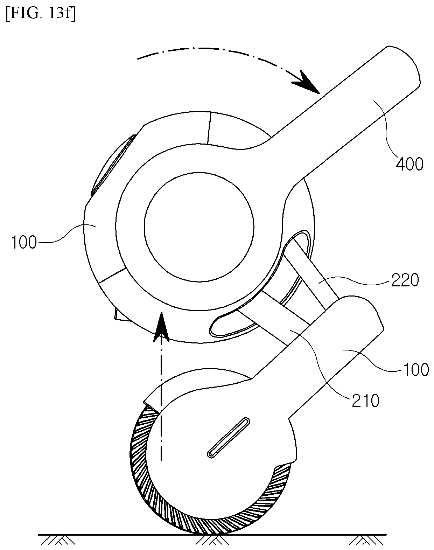

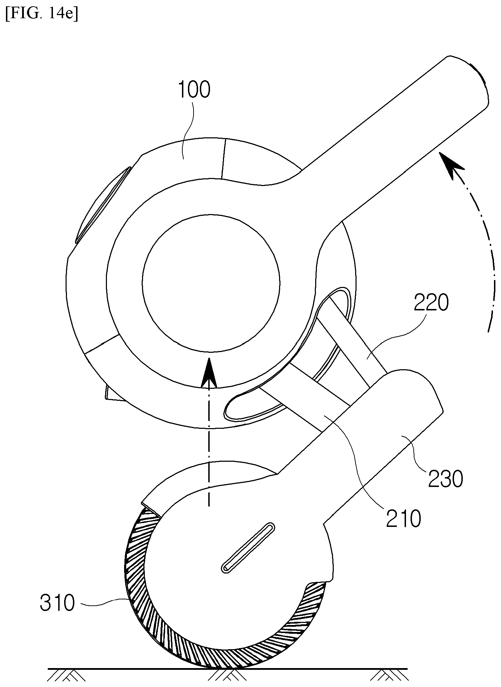

That is, the suspension motor MS may be rotated in a direction in which the distance between the wheel 310 and the robot body 100 increases. **In** this case, the coupling angle of the upper and lower links gradually increases (see FIGS. 13F and 14E).

**In** the operation S3500, the suspension motor MS may be rotated until the coupling angle becomes the coupling angle in the basic posture. Thereafter, even when the suspension motor MS is stopped, the coupling angle may be maintained by the gravity compensator.

The control method of changing a robot's posture from a fallen posture to a basic posture may include an operation S3600 of moving the arm 400 to a position corresponding a preset basic posture.

More specifically, the arm motor MA may be rotated in a direction opposite to the rotational direction in operations S3300 and S3400. Since the arm may not continuously rotate in the same rotational direction as in operations S3300 and S3400 due to interference with the leg unit 200, the arm 400 needs to be rotated in the opposite direction in order to restore the posture to the basic posture.

**In** the case in which the robot 1 falls forward, since the arm motor MA has rotated forward in operations S3300 and S3400, the arm motor MA rotates backward in the present operation.

**In** the case in which the robot 1 falls backward, since the arm motor MA has rotated backward in operations S3300 and S3400, the arm motor MA rotates forward in the present operation.

The arm motor MA may be controlled to be stopped after rotated until the arm 400 reaches the position corresponding to the basic posture. The position corresponding to the basic posture may be a position at which the connector 420 is disposed on the upper rear side of the robot body 100 (see FIGS. 13F and 14E).

**In** the case in which the conventional two-wheeled robot falls, it is necessary to momentarily rotate a pair of wheels strongly and then maintain balance while the robot continuously moves forward and backward.

To solve this problem, there is a method of using arms provided on left and right sides of a robot to allow the robot to stand up by pressing against the ground, but when the pair of arms are separated, a slight difference in the rotation speed inevitably occurs due to a mechanical structure, a degree of wear, etc. when the arms are rotated. That is, there is a high probability that positions at which the left and right arms come into contact with the ground will be different. **In** this case, force points pressed by the robot on the ground to stand up will be different, and as a result, the robot may shake when standing up. **In the** worst case, the robot may fall again.

**In** contrast, according to the embodiment of the present invention including the arm 400 connected in an integrated structure by the connector 420, the left and right sides of the arm 400 inevitably come into contact with the ground at the same time. Contact points are also constant.

Moreover, since the left and right rotation coupling units 410 of the arm 400 are formed in a plane shape parallel to the ground in the left-right direction through the connector 420, a relatively wider area may come into contact with the ground than when the left and right arms are separated and present separately. That is, since a frictional force with the ground increases through the connector 420, the ground support provided by the arm 400 may be made more solid when implementing the operation in which the robot 1 stands up.

As the force with which the arm 400 supports the ground increases, the robot body 100 can be easily lifted even with a small rotational torque of the wheel 310. Accordingly, since the wheel 310 does not need to apply a strong rotational force momentarily to raise the robot body 100, it is possible to prevent the motor from being damaged and reduce the overall power consumption.

**In** addition, since the arm 400 firmly supports the ground by surrounding the robot body 100 from the outside on the left and right sides of the robot body 100, the robot body 100 can stand up stably and in a balanced manner without being biased to one side or shaking during the process of being lifted.

Although the present invention has been described in detail through specific embodiments, this is intended to specifically describe the present invention, and it is apparent that the present invention is not limited thereto, and the present invention can be modified or improved by those skilled in the art without departing from the technical spirit of the present invention.

All simple modifications or changes of the present invention fall within the scope of the present invention, and the specific scope of the present invention will be made clear by the appended claims.

## Claims

1. A method of controlling a robot including a wheel motor that rotates wheels respectively disposed on left and right sides of a robot body, and an arm motor that rotates an integrated arm simultaneously coupled to both left and right side surfaces of the robot body, the method comprising:
driving the arm motor so that one end portion of the arm approaches a ground;
stopping driving of the wheel motor so that the robot tilts backward; and
changing the robot to a standby posture while supported at three points on the ground.

2. The method of claim 1, wherein the robot further includes a suspension motor that adjusts a coupling angle of a joint structure between an upper link and a lower link of a leg unit connected between the wheel and the robot body.

3. The method of claim 2, further comprising, before the driving of the arm motor, driving the suspension motor so that a distance between the wheel and the robot body decreases.

4. The method of claim 3, wherein, in the driving of the suspension motor, the coupling angle between the upper link and the lower link decreases.

5. The method of claim 1, wherein the robot further includes a leg unit connected between the wheel and the robot body and formed in a joint structure in which the upper link and the lower link are link-coupled,
the arm includes:
a pair of rotation coupling units rotatably coupled to the robot body and disposed on left and right sides thereof, respectively; and
a connector connecting the pair of rotation coupling units, and
in the driving of the arm motor, the connector is disposed further forward and lower than a coupling point of the upper link and the lower link.

6. The method of claim 2, wherein the driving of the arm motor includes stopping the driving of the arm motor when the arm is rotated to a position at which a rotation range of the arm is restricted by a stopper formed on the upper link.

7. The method of claim 6, wherein, in the driving of the arm motor, when a rotating protrusion formed on the arm and rotating along with the arm comes into contact with the stopper, movement of the joint structure is restricted.

8. The method of claim 7, further comprising, after the driving of the arm motor, stopping driving of the suspension motor in a state in which the movement of the joint structure is restricted.

9. A method of controlling a robot including a wheel motor that rotates wheels respectively disposed on left and right sides of a robot body, and an arm motor that rotates an integrated arm simultaneously coupled to both left and right side surfaces of the robot body, the method comprising:
driving the arm motor to bring the arm into contact with a ground when a component other than the wheels comes into contact with the ground as the robot tilts forward or backward; and
simultaneously driving the wheel motor and the arm motor in the same direction to move the robot body upward.

10. The method of claim 9, wherein the robot further includes a suspension motor that adjusts a coupling angle of a joint structure between an upper link and a lower link of a leg unit connected between the wheel and the robot body, and
the method further comprises, before the bringing the arm into contact with the ground, driving the suspension motor to decrease a distance between the wheel and the robot body.

11. The method of claim 10, further comprising: after the moving of the robot body upward,
driving the suspension motor to increase the distance between the wheel and the robot body; and
driving the arm motor to move the arm to a position corresponding to a predetermined basic posture.

12. The method of claim 9, wherein the robot further includes a leg unit connected between the wheel and the robot body and formed in a joint structure in which the upper link and the lower link are link-coupled, and
in the decreasing of the distance between the wheel and the robot body, the coupling angle between the upper link and the lower link decreases.

13. The method of claim 9, wherein, in the bringing of the arm into contact with the ground, a center of gravity of the robot body is disposed between a contact point at which the wheel comes into contact with the ground and a contact point at which the arm comes into contact with the ground.

14. The method of claim 9, wherein the moving of the robot body upward includes:
simultaneously rotating the arm and the wheel forward in a state in which the arm is in contact with a ground in front of the wheel when the robot tilts forward and a component other than the wheel is in contact with the ground; and
simultaneously rotating the arm and the wheel backward in a state in which the arm is in contact with a ground behind the wheel when the robot tilts backward and the component other than the wheel is in contact with the ground.

15. A robot comprising:
a robot body in which a battery is accommodated;
two wheels disposed below the robot body;
two leg units connected between the robot body and the wheel; and
an integrated arm including a pair of rotation coupling units respectively disposed on left and right sides rotatably coupled to the robot body, and a connector connecting the pair of rotation coupling units,
wherein, when the wheel travels on the ground, the connector maintains a basic posture in which the connector is disposed at an upper rear side of the robot body, and
when a posture change occurs between the basic posture and another specific posture, an operation in which a position of the connector is changed by rotation of the arm is involved.

16. The robot of claim 15, wherein each of the leg units includes:
an upper link link-coupled to the robot body; and
a lower link link-coupled to the upper link and coupled to the wheel, and
before the arm is rotated, an operation in which a coupling angle between the upper link and the lower link decreases is performed.

17. The robot of claim 15, wherein, when the specific posture is a fallen posture in which the robot body tilts forward or backward and a component other than the wheel is in contact with the ground,
the arm rotates so that the connector moves in a direction approaching the ground in a state of the fallen posture, and
in a state in which the connector is in contact with the ground, the robot body is moved upward by an operation in which the arm and the wheel rotate in the same direction so that the basic posture is restored.

18. The robot of claim 17, wherein, when the robot falls forward, both the arm and the wheel rotate forward in a state in which the connector is in contact with a ground in front of the wheel, and
when the robot falls backward, both the arm and the wheel rotate backward in a state in which the connector is in contact with a ground behind the wheel.

19. The robot of claim 15, wherein, when a predetermined specific condition is satisfied,
the arm rotates toward the rear of the robot body in the state of the basic posture, and
is changed to a standby posture having three contact portions spaced apart from each other with respect to the ground by the two wheels and the connector.

20. The robot of claim 19, wherein, before the change to the standby posture, the driving of the wheel motor that rotates the wheel is stopped.
